(19) Europäisches Patentamt
European Patent Office
Office européen des brevets

(11) EP 2 093 709 A1

(12) **EUROPEAN PATENT APPLICATION**
published in accordance with Art. 153(4) EPC

(43) Date of publication:
**26.08.2009 Bulletin 2009/35**

(51) Int Cl.:
***G06T 7/00*** *(2006.01)*    ***G06F 17/30*** *(2006.01)*
***G06T 1/00*** *(2006.01)*

(21) Application number: **07832850.7**

(22) Date of filing: **30.11.2007**

(86) International application number:
**PCT/JP2007/073156**

(87) International publication number:
**WO 2008/066152 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.11.2006 JP 2006324095**

(71) Applicant: **NEC Corporation Tokyo 108-0014 (JP)**

(72) Inventor: **AKIYAMA, Tatsuo Tokyo 108-0014 (JP)**

(74) Representative: **Betten & Resch Patentanwälte Theatinerstrasse 8 (Fünf Höfe) 80333 München (DE)**

(54) **DOCUMENT IMAGE FEATURE VALUE GENERATING DEVICE, DOCUMENT IMAGE FEATURE VALUE GENERATING METHOD, AND DOCUMENT IMAGE FEATURE VALUE GENERATING PROGRAM**

(57)    When connected regions contact in one image and are separated in the other image with respect to a centroid of connected regions obtained from a registered and a binary image of a registered image, different feature points are extracted due to contact and separation, and so feature value which are matched to each other could not be acquired.

A document image feature value generating device is a document image feature value generating device which extracts feature points from an input image which is input and generates a feature value from the feature points and includes integrating feature point extracting means and feature value generating means. The integrating feature point extracting means determines connected regions from the input image which is input, computes centroids of the connected regions and the feature points, integrates at least some of the connected regions, and obtains an integrating feature point from a centroid of an integrated connected region. The feature value generating means sets a principal feature point from among the feature points obtained and generates a feature value of the integrated connected region from neighbor feature points which are arranged near to the principal feature point and the integrating feature point.

FIG.2

REGISTERED IMAGE FEATURE VALUE COMPUTING DEVICE 1

FEATURE POINT EXTRACTING UNIT 11

BINARY IMAGE GENERATING SECTION ~111

CONNECTED REGION COMPUTING SECTION ~112

CONNECTED REGION CENTROID COMPUTING SECTION ~113

INTEGRATING FEATURE POINT COMPUTING SECTION ~114

REGISTERED IMAGE FEATURE VALUE COMPUTING UNIT 12

PRINCIPAL FEATURE POINT SETTING SECTION ~121

NEIGHBOR FEATURE POINT COMPUTING SECTION ~122

NEIGHBOR FEATURE POINT SELECTING SECTION ~123

INVARIANT COMPUTING SECTION ~124

REGISTERED IMAGE FEATURE VALUE STORAGE DEVICE ~3

EP 2 093 709 A1

**Description**

{Technical Field}

The present invention relates to a document image feature value generating device, a document image feature value generating method, a document image feature value generating program, a document image feature value storage device, a document image feature value storage method, a document image feature value storage program, a document image feature value collating device, a document image feature value collating method, and a document image feature value collating program, and more particularly, to a document image feature value generating device of a document image retrieval feature value, a document image feature value generating method, a document image feature value generating program, retrieval using the feature value, a document image feature value storage device, a document image feature value storage method, a document image feature value storage program, a document image feature value collating device storing the feature value, a document image feature value collating method, and a document image feature value collating program in which a bad influence on an image retrieval or identification which is caused by a difference of a connected region appearance resulting from a difference of an imaging condition of a registered document image or a retrieved document image is suppressed.

{Background Art}

Conventionally, a device which brings a document or an image and computes a feature value of the document or the image is known. An example of a system employing the device is disclosed in Non Patent Literature 1.

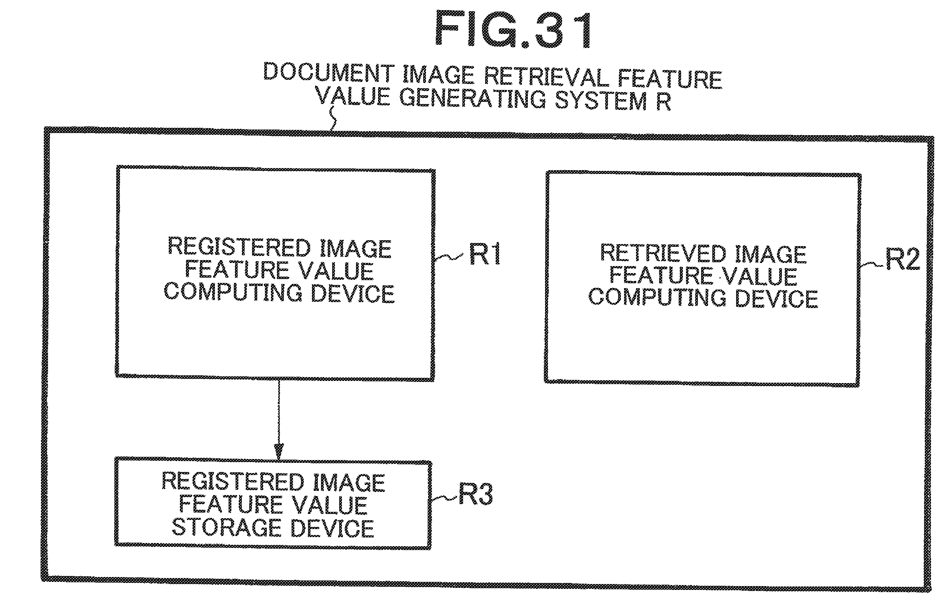

The system is a system which includes a document image retrieval feature value generating system R, and the document image retrieval feature value generating system R includes a registered image feature value computing device R1, a retrieved image feature value computing deice R2, and a registered image feature value storage device R3 as illustrated in FIG. 31.

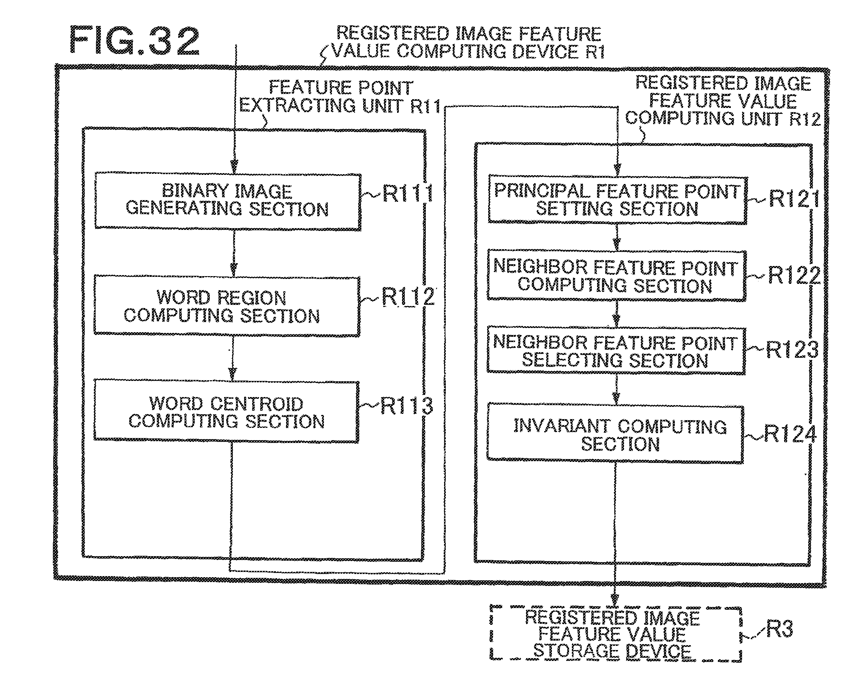

First, a configuration of the registered image feature value computing device R1 will be described below with reference to FIG. 32.

The registered image feature value computing device R1 includes a feature point extracting unit R11 and a registered image feature value computing unit R12.

The feature point extracting unit R11 includes a binary image generating section R111, a word region computing section R112, and a word centroid computing section R113.

The registered image feature value computing unit R12 includes a principal feature point setting section R121, a neighbor feature point computing section R122, a neighbor feature point selecting section R123, and an invariant computing section R124.

The invariant computing section R124 outputs a computation result from the registered feature value computing device R1 and inputs the computation result into the registered image feature value storage device R3.

Next, an operation of the document feature value generating system when a registered image is input to the registered image feature computing device R1 will be described with reference to a flowchart.

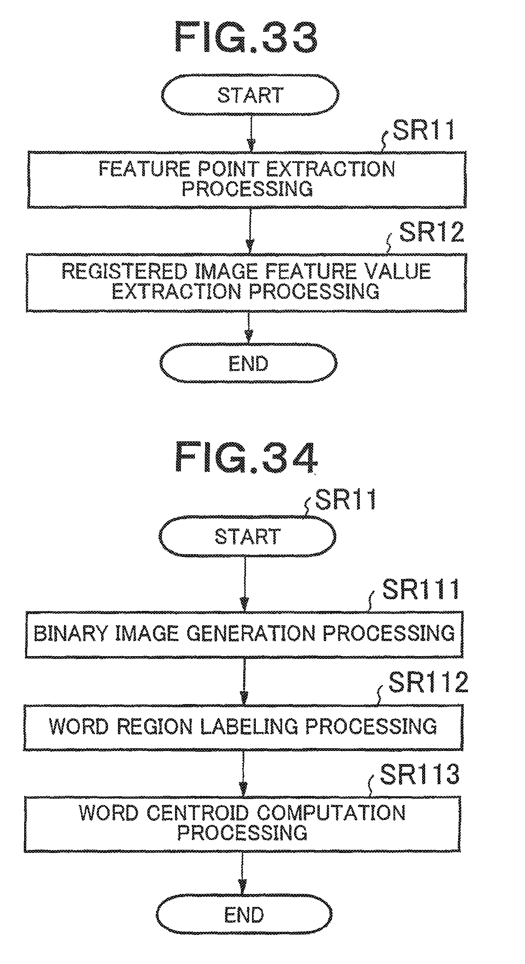

Referring to FIG. 33, when a registered image is input to the registered image feature value generating device R1, the feature point extracting unit R11 extracts a feature point from the input registered image (which is referred to as feature point extraction processing) (step SR11).

When the feature point is obtained through feature point extraction processing of step SR11, the procedure proceeds to step SR12, and the registered image feature value computing unit R12 (FIG. 32) performs processing (which is referred to as registered image feature value extraction processing) for computing a feature value from the obtained feature point.

As described above, the registered image feature value computing device R1 performs feature point extraction processing and registered image feature value extraction processing to generate the feature value.

Next, an operation of the feature point extracting unit R11 (FIG. 32) which performs feature point extraction processing of step SR11 will be described with reference to a flowchart illustrated in FIG. 34.

First, referring to the flowchart of FIG. 34, the binary image generating section R111 (FIG. 32) performs adaptive binarization for the input registered image to generate a binary image (step SR111).

Next, the word region computing section R112 (FIG. 32) applies a Gaussian filter to the generated binary image and then performs the binarization again to obtain a word region of the registered image (step SR112). Here, processing of step SR112 is referred to as word region labeling processing.

Then, the word centroid computing section R113 (FIG. 32) computes a centroid of the word region of the registered image (which is referred to as word centroid computation processing) which is used as the feature point (step SR113).

When the feature point is obtained in step SR113, the registered image feature value computing unit R12 (FIG.

32) performs feature value computation (which refers to registered image feature value extraction processing described above) using the feature point (step SR12 of FIG. 33).

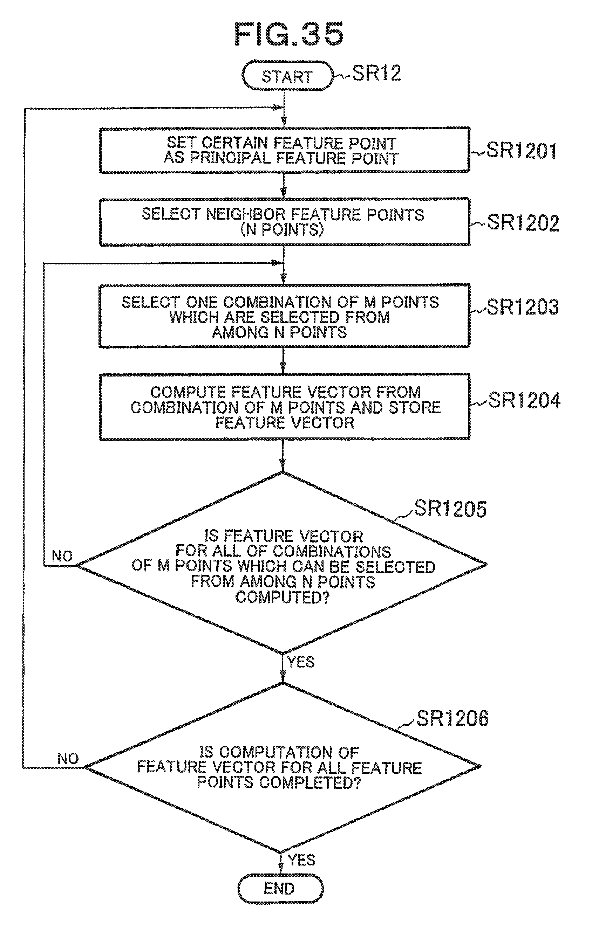

Next, processing of the registered image feature value computing unit R12 which performs registered image feature value extraction processing will be described with reference to a flowchart of FIG. 35.

Referring to a flowchart of FIG. 35, in the registered image feature value computing unit R12 (FIG. 32), the principal feature point setting section R12 (FIG. 32) sets a certain feature point among feature points computed by the feature point extracting unit R11 as a principal feature point (step SR1201).

The neighbor feature point computing section R122 (FIG. 32) selects N feature points (which are referred to as near feature points) around the principal feature point (step SR1202).

Next, feature vectors of all combinations of M feature points which can be selected from the N near feature points are computed. To this end, one combination of M near feature points is first selected from among combinations of M points by the neighbor feature point selecting section R123 (FIG. 32) (step SR1203), and a feature value (vector) is computed by the invariant computing section R124 (FIG. 32) (step SR1204).

Here, the neighbor feature point selecting section R123 (FIG. 32) orders the selected M points in such a way that a certain principal feature point is located at a center, and M points are ordered counterclockwise using the certain principal feature point as an axis, starting from a feature point nearest to the principal feature point.

Accordingly, the invariant computing section R124 computes one feature vector from one of combinations of M points which are ordered.

In further detail, the invariant computing section R124 stores and selects orders of all combinations of f points which can be selected from a combination of M points which are ordered, repetitively computes a predetermined kind of an invariant from combinations of f points whose orders are stored using a predetermined method to thereby compute a feature vector, and then stores the feature vector.

Here, the number of times that computation is repeated is defined by

$$\{\text{Formula 1}\}$$
$$_M C_f \ldots (1),$$

and one $_M C_f$-dimensional feature vector is generated by repeating Formula 1 $_M C_f$ times.

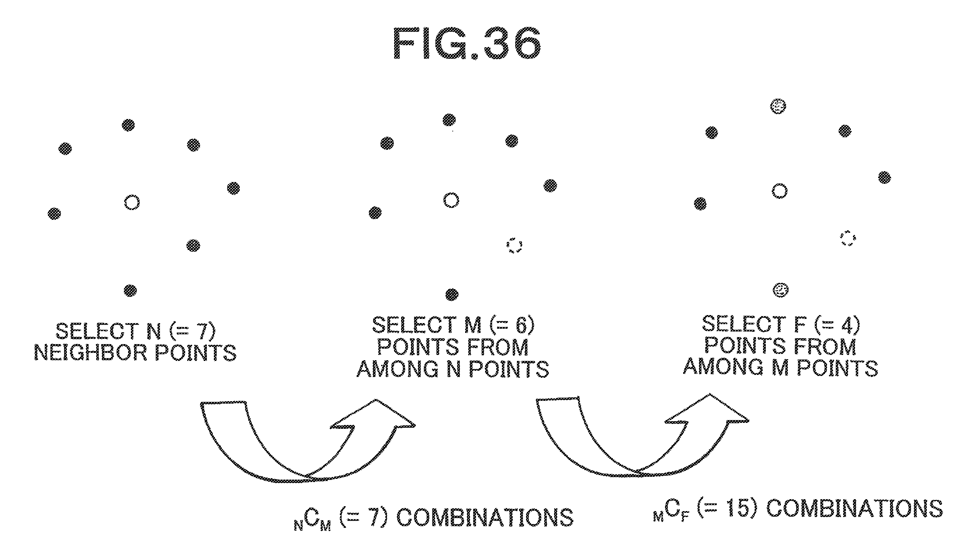

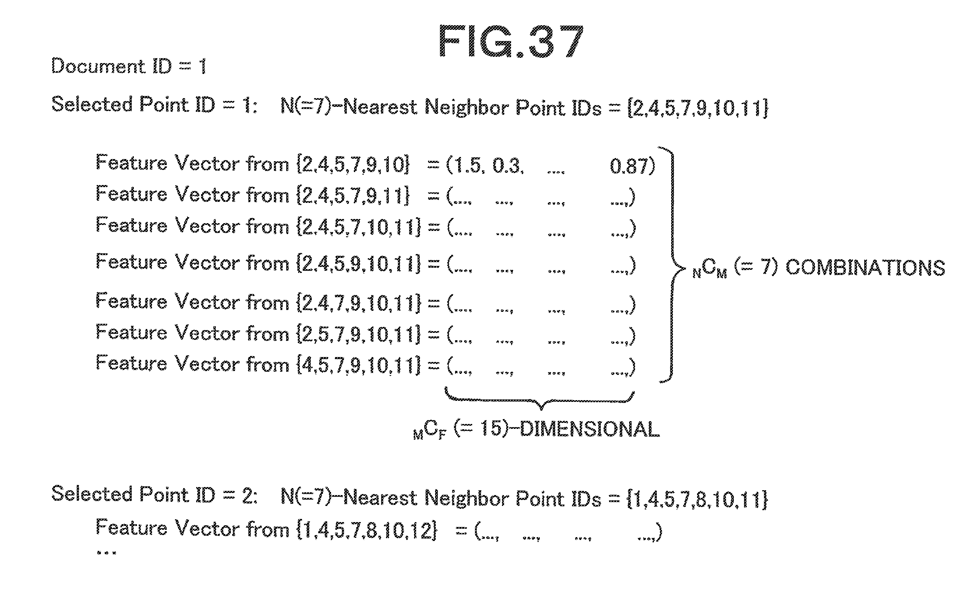

For example, a concrete example for computing a feature vector from a combination of M points which are ordered will be described with reference to FIGs. 36 and 37.

FIG. 36 illustrates that M points are selected from among N points, and f points are selected from among M points.

FIG. 36 illustrates a case in which N is 7, M is 6, and f is 4 as a concrete example, and FIG. 37 illustrates how combinations of M points selected from N points or combinations of f points selected from M points are used in registered image feature value computation to compute a feature vector (step SR1204).

As illustrated in FIGs. 36 and 37, for one principal feature point, the $_M C_f$ (which corresponds to the number of all combinations of f points which can be selected from a combination of M points)-dimensional feature vector defined by Formula 1 is computed from $_N C_M$ (which corresponds to the number of all combinations of M points which can be selected from a combination of N points).

That is, one 15-dimentional feature vector is generated in such a way that orders of all combinations of 4 points which can be selected from a combination of 6 points whose are ordered are stored and selected, a predetermined kind of invariant is computed from combinations of 4 points whose orders are stored, and the computation is repeated 15 times (step SR1204 of FIG. 35).

As described above, the invariant computing section R124 computes a feature vector for one of combinations of M points whose are ordered by a neighbor feature point which is nearest from a certain principal feature point.

The invariant computing section R124 generates 7 15-dimentional feature vectors by repeating computation of a feature vector 7 times which is the number of times of $_N C_M$ defined by Formula 1.

In further detail, the invariant computing section R124 determines whether or not computation of a feature vector for all combination of M points which can be selected from among N points, i.e., all of $_N C_M$ (for example, 7) combinations, is completed (step SR1205 of FIG. 35).

When computation of a feature vector even for one of all combinations of M near feature points is not completed, the procedure returns to step SR1203, so that neighbor feature points which are not selected yet are selected by the neighbor feature point selecting section R123, and then a feature vector which is not computed yet is computed.

Meanwhile, when computation of a feature vector for all combination of M points which can be selected from among N points with respect to a certain principal feature point, i.e., all of $_N C_M$ (e.g., 7) combinations, is completed, the invariant computing section R124 proceeds to step SR1206 and determines whether or not computation of a feature vector for all feature points is completed.

When computation of a feature vector for all feature points is completed, registered image feature value extraction processing (step SR12 of FIG. 32) is finished.

However, when computation of a feature vector for all feature points is not completed yet, the procedure returns to step SR1201 and so sets a feature point which is not computed yet as a principal feature point and computes a feature vector which is not selected, so that all feature vectors are computed through registered image feature value extraction processing.

Therefore, processing (that is, registered image feature value extraction processing of FIG. 33) of the registered image feature value computing unit R12 is continuously performed until all feature vectors are computed using all feature points extracted by the feature point extracting unit R11 as a principal feature point.

According to Non Patent Literature 1, registration processing of a feature value is performed by hashing after a feature value vector is computed, but this is not related to a problem to be solved by the present invention and thus is not described here.

Meanwhile, the invariant computing section R124 (FIG. 32) computes a feature value vector in which a value of each geometric invariant is used as an element by computing geometric invariants computed from f feature points in a predetermined order with respect to all of f feature points which are selected from among M points.

A value of f depends on a used geometric invariant. Therefore, a kind of a geometric invariant used cannot but be determined when a conversion which is desired to be allowed between a registered image and a retrieved image is determined.

For example, in Non Patent Literature 1, since an affine invariant computed from arbitrary 4-point coordinates is used as a geometric invariant under the assumption that an affine conversion is allowed, f is 4 (four). Also, N and M need to be previously set to values which satisfy $N \geq M \geq f$, respectively.

In further detail, for example, in Non Patent literature 1, results of the cases of using (10, 10) and (8, 7) as (N, M) are reported.

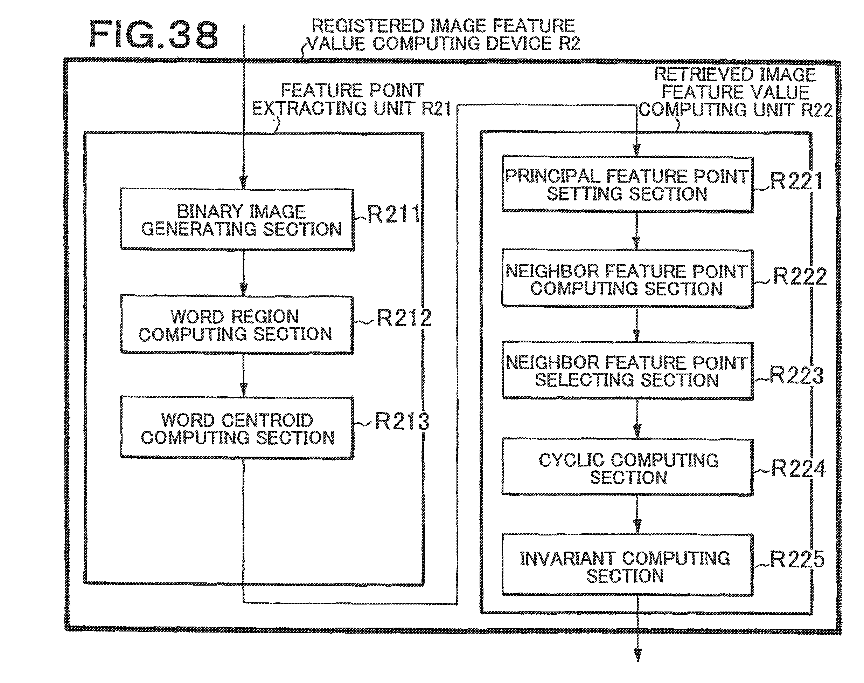

Next, the retrieved image feature value computing device R2 installed in the document image retrieval feature value generating system will be described with reference to FIG. 38. FIG. 38 illustrates a configuration of the retrieved image feature value computing device R2.

The retrieved image feature value computing device R2 (FIG. 38) includes a feature point extracting unit R21 and a retrieved image feature value computing unit R22.

The feature point extracting unit R21 (FIG. 38) includes a binary image generating section R211, a word region computing section R212 and a word centroid computing section R213. The feature point extracting unit R21 is identical to the feature point extracting section R11 (FIG. 32) of the registered image feature value computing device R1.

The feature value computing unit R22 (FIG. 38) includes a principal feature point setting section R221, a neighbor feature point computing section R222, a neighbor feature point selecting section R223, a cyclic computing section R224, and an invariant computing section R225.

Here, the principal feature point setting section R221, the neighbor feature point computing section R222, the neighbor feature point selecting section R223, and the invariant computing section R225 are identical to the principal feature point setting section R121, the neighbor feature point computing section R122, the neighbor feature point selecting section R123, and the invariant computing section R124 of the registered image feature value computing device R1 (FIG. 32), respectively.

That is, the retrieved image feature value computing device R2 (FIG. 38) further includes the cyclic computing section R224 compared to the registered image feature value computing device R1.

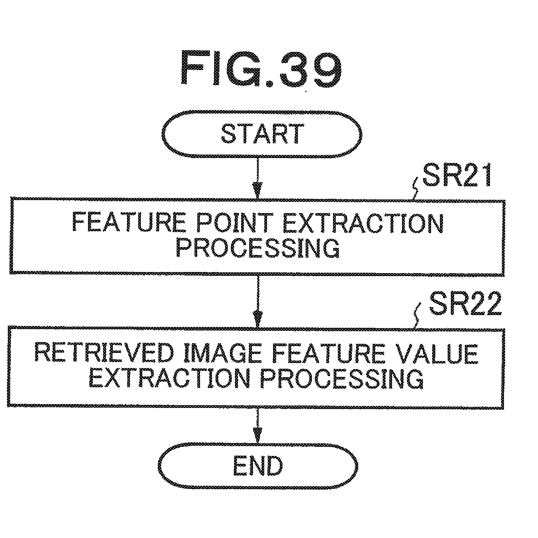

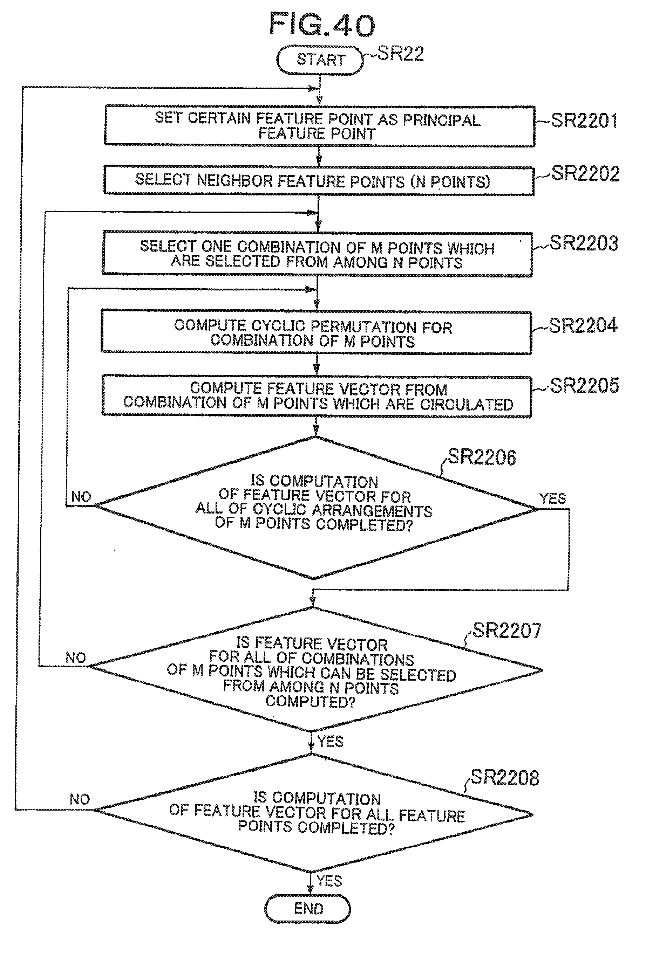

Next, an operation of the retrieved image feature value computing device R2 will be described with reference to flowcharts of FIGs. 39 and 40.

In the document image feature value generating system R, when a registered image is input to the retrieved image feature value computing device R2(FIG. 38), the feature point extracting unit R21 extracts a feature point from the input registered image (step SR21 of FIG. 39). In this case, the feature point extracting unit R21 (FIG. 38) extracts the feature point by the same operation as the feature point extracting unit R11 (FIG. 32) of the registered image feature value computing device R1.

Therefore, the feature point extracting unit R21 (FIG. 38) performs the same operation as the feature point extracting unit R11 (FIG. 32), and thus duplicated description will not be repeated.

After the feature point is obtained by feature point extracting unit R21 (FIG. 38), the retrieved image feature value computing unit R22 (FIG. 38) of the retrieved image feature value computing device R2 computes a feature value for document image retrieval (which is referred to as retrieved image feature value extraction processing) (step SR22).

An operation of the retrieved image feature value computing unit R22 (FIG. 38) is almost identical to an operation of the registered image feature value computing unit R12 (FIG. 32) as illustrated in the flowchart of FIG. 39.

However, the retrieved image feature value computing device R2 is different from the registered image feature value computing device R1 in the fact that it obtains a cyclic permutation for an ordered combination obtained by the neighbor feature point selecting section R223 (FIG. 38) in step SR2204 of FIG. 40.

Here, the cyclic permutation refers to a permutation in which, when a set of elements (e.g., {P1, P2, P3, P4}) which are ordered is given, an order of elements is changed in order to circulate an order of elements which is P1 → P2 → P3 → P4 (→ P1) (conceptually, is replaced with an order in which elements are shifted to the right n times according to P1 → P2 → P3 → P4 (→ P1), respectively) to thereby obtain an ordered set.

In detail, for example, what {P1, P2, P3, P4} is replaced with {P2, P3, P4, P1}, {P3, P4, P1, P2} or {P4, P1, P2, P3} is referred to as a cyclic permutation.

However, for example, what {P1, P2, P3, P4} is replaced with {P1, P3, P2, P4} or {P1, P4, P2, P3} does not correspond to a cyclic permutation according to the present invention.

Here, neighbor feature points correspond to elements {P1, P2, ...}.

In step SR2204, a cyclic permutation is computed as described above, and, in step SR2205, feature vectors are obtained for all cyclic permutations related to all of ordered combinations of M points selected in step SR2203.

In step SR2206, it is determined whether or not computation of feature vectors for all cyclic arrangements of M points is completed.

Here, when computation of a feature vector for all cyclic arrangements of M points is not completed, the procedure returns to step SR2204 and computes a feature vectors for a cyclic arrangement which is not computed yet.

Meanwhile, when computation of a feature vector for all cyclic arrangements of M points is completed, the procedure proceeds to step SR2207 and determines whether or not computation of a feature vector for all combinations of M points which can be selected from among N points is completed.

When computation of a feature vector for all combinations of M points which can be selected from among N points is not completed, the procedure returns to step SR2203 and computes a feature vector for a combination of M points which is not selected yet.

However, when computation of a feature vector for all combinations of M points which can be selected from among N points is completed, the procedure proceeds to step SR2208 and determines whether or not computation of a feature vector for all feature points is completed.

Accordingly, feature vectors for all combinations of M points which can be selected from among N points are computed.

Next, in step SR2208, it is determined whether or not computation of a feature vector for all feature points is completed, and when computation of a feature vector for all feature points is not completed, the procedure returns to step SR2201, and sets a feature point which is not computed yet as a principal feature point and computes a feature vector.

Accordingly, feature vectors for all feature points can be computed.

According to Non Patent literature 1, the same values as N, M and f of the registered image feature value computing unit R12 (FIG. 32) are used as values of N, M and f.

The registered image feature value storage device R3 (FIG. 31) is a device which stores feature values (vectors) computed in the registered image feature value computing device R1.

In the conventional art described above, an invariant for a certain geometric conversion which has to be allowed in advance is used as an element of a feature value (vector).

As an invariant for a geometric conversion, a perspective invariant, an affine invariant and a similarity invariant are described in Non Patent literature 2.

Therefore, for example, when an affine invariant is used as an element of a feature vector, even though an affine conversion occurs between a retrieved image and a registered image, feature vectors which are identical in principle can be computed from both images.

That is, there is an advantage of being capable of generating feature vectors which can be used for collation without performing pre-processing such as gradient correction and size correction for a registered image or a retrieved image in advance.

As a labeling method of a connected region, methods such as run-analysis and boundary tracking are described in Non Patent literature 3.

A conventional feature point extraction method for extracting a feature point is described in Non Patent literature 4.

{Citation List} {Non Patent Literature}

{NPL 1} Tomohiro Nakai et. all, "Use of Affine Invariants and Similarity Invariants in Fast Camera-based Document Image Retrieval", IEIC Technical Report (pattern recognition/media understanding, PRMU2005-184-201), Vol.105, No.614, Page.25-30, Feu. 16, 2006.

{NPL 2} Jun Sato, "Computer Vision", Corona publishing, page.54-65, 1999.

{NPL 3} Hideyuki Tamura, "Computer Image Processing", Ohm publishing, page.149-153, 2002.
{NPL 4} Tomohiro Nakai et. all, "Digital Camera-based Document Image Retrieval-Retrieving then thousand pages in 0.1 second", Information Science Technology Letters, Vol.4, page. 133-136 (LI-001), Aug. 2005.

{Summary of Invention}

{Technical Problem}

However, in Non Patent Literatures 1 to 4, only a centroid of a connected component acquired from a binarized image is used as a feature point. Therefore, connected regions determined from a registered image and a retrieved image which have to correspond to each other contact in one image and are separated in the other image, so that feature points used for computation of a feature value are arranged at substantially different locations.
That is, when connected regions determined from a registered image and a retrieved image which have to correspond to each other contact in one image and are separated in the other image due to an object difference of scanners or a difference of imaging conditions, there is a problem in that feature values which are matched to each other cannot be acquired.
The present invention is devised to solve the above problem, it is an object of the present invention to provide a document image feature value generating device, a document image feature value generating method, a document image feature value generating program, a document image feature value storage device, a document image feature value storage method, a document image feature value storage program, a document image feature value collating device, a document image feature value collating method, and a document image feature value collating program in which feature values which correspond to each other can be obtained even though connected regions of interest of a registered image and a retrieved image contact in one image and are separated in the other image.

{Solution to Problem}

According to one aspect of the present invention, there is provided a document image feature value generating device which extracts feature points from an input image which is input and generates a feature value from the feature points, including: integrating feature point extracting means for determining connected regions from the input image which is input, computing centroids of the connected regions and the feature points, integrating at least some of the connected regions, and obtaining an integrating feature point from a centroid of an integrated connected region; and feature value generating means for setting a principal feature point from among the feature points obtained and generating a feature value of the integrated connected region from neighbor feature points which are arranged near to the principal feature point and the integrating feature point.
According to another aspect of the present invention, there is provided a document image feature value generating method of a document image feature value generating device which extracts feature points from an input image which is input and generates a feature value from the feature points, including: an integrating feature point extracting step of determining connected regions from the input image which is input, computing centroids of the connected regions and the feature points, integrating at least some of the connected regions, and obtaining an integrating feature point from a centroid of an integrated connected region; and a feature value generating step of setting a principal feature point from among the feature points obtained and generating a feature value of the integrated connected region from neighbor feature points which are arranged near to the principal feature point and the integrating feature point.
According to still another aspect of the present invention, there is provided a document image feature value generating program of a document image feature value generating device which extracts feature points from an input image which is input and generates a feature value from the feature points, for causing a computer to perform: an integrating feature point extracting sequence of determining connected regions from the input image which is input, computing centroids of the connected regions and the feature points, integrating at least some of the connected regions, and obtaining an integrating feature point from a centroid of an integrated connected region; and a feature value generating sequence of setting a principal feature point from among the feature points obtained and generating a feature value of the integrated connected region from neighbor feature points which are arranged near to the principal feature point and the integrating feature point.

{Advantageous Effects of Invention}

According to the present invention, since a feature value is generated using a centroid of an integrated connected region as a feature point, feature points of a registered image and a retrieved image for computation of feature values are almost identical in arrangement.
Therefore, even when connected regions computed from a registered image and a retrieved image contact in one image and are separated in other image, feature values which are almost identical can be generated, whereby a document image feature value generating device, a document image feature value generating method, a document image feature value generating program, a document image feature value storage device, a document image feature value storage method, a document image feature value storage program, a document image feature value collating device, a document image feature value collating method, and a document image feature value collating program can be realized.

{Brief Description of Drawings}

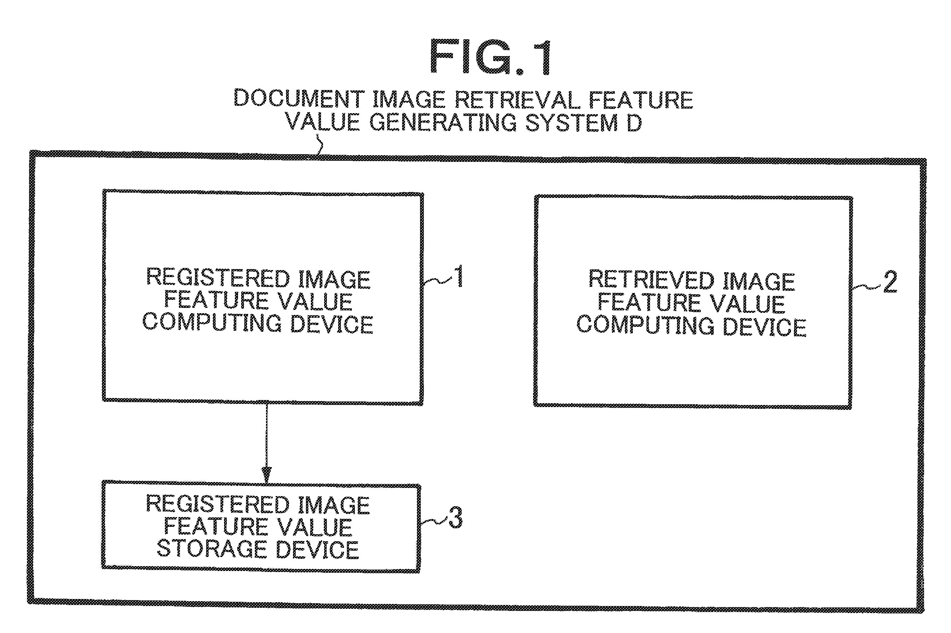

{Fig. 1} A block diagram illustrating a configuration of a document image retrieval feature value generating system according to the present invention.

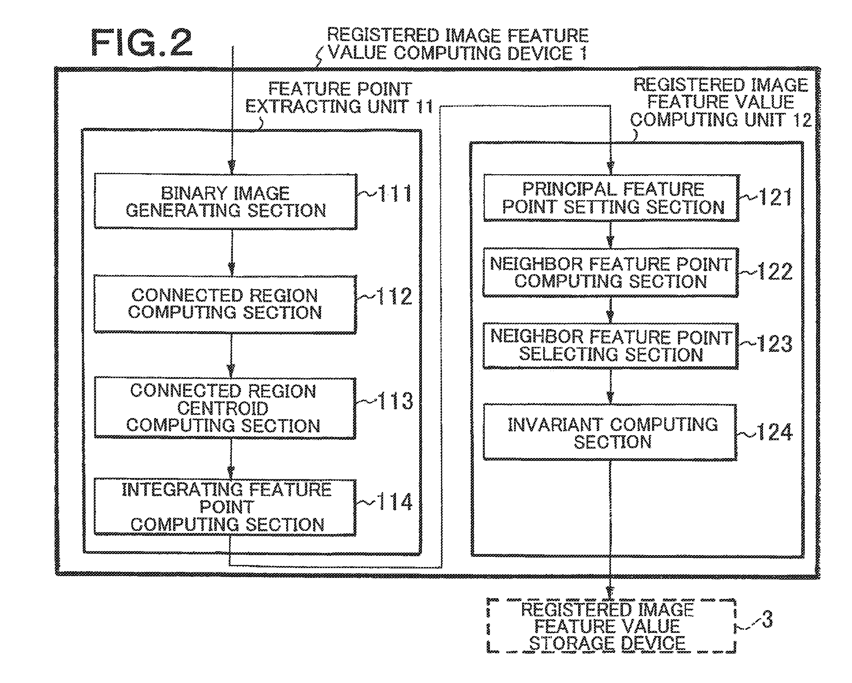

{Fig. 2} A block diagram illustrating a configuration of a registered image feature value computing device according to a first embodiment of the present invention.

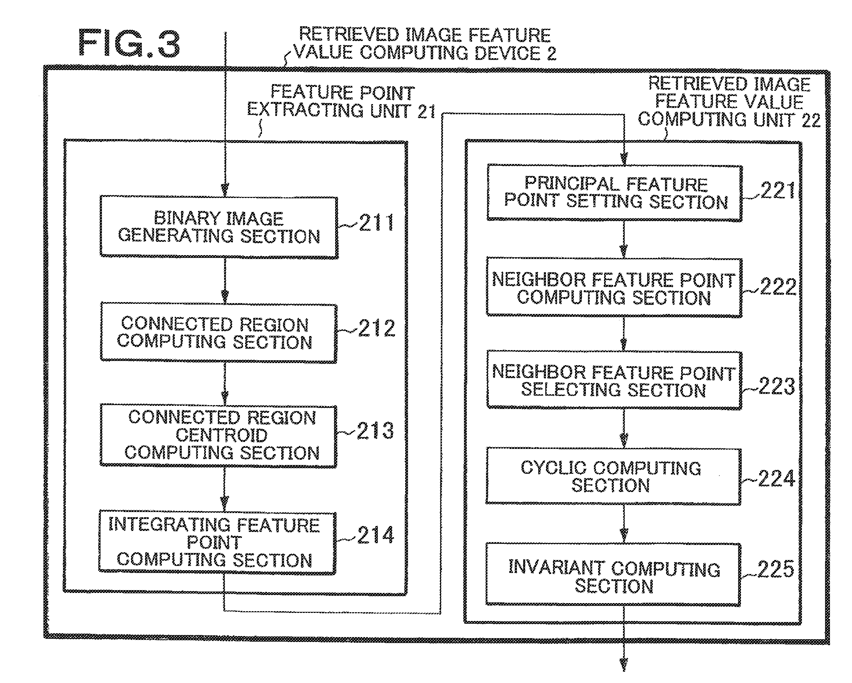

{Fig. 3} A block diagram illustrating a configuration of a retrieved image feature value computing device according to the first embodiment of the present invention.

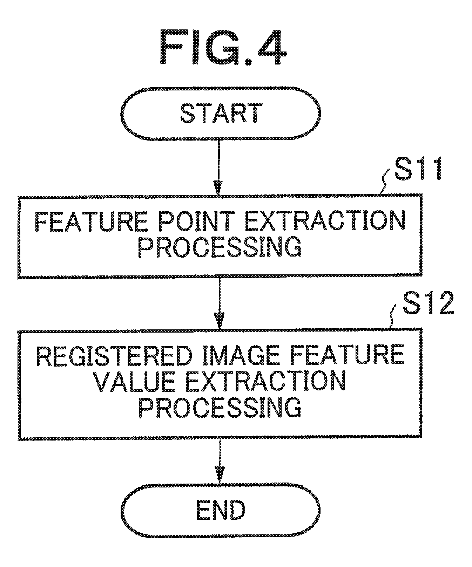

{ Fig. 4} A flowchart illustrating an operation of the registered image feature value computing device according to the first embodiment of the present invention.

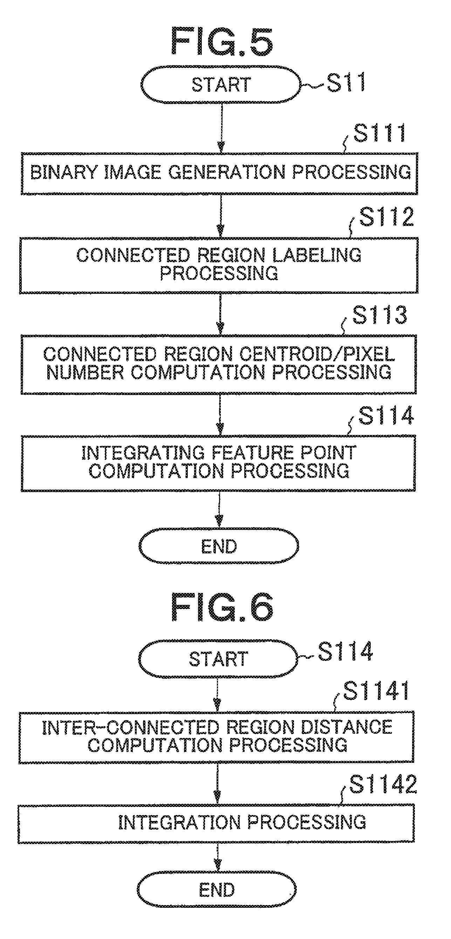

{ Fig. 5} A flowchart illustrating an operation of a feature point extracting unit according to the first embodiment of the present invention.

{ Fig. 6} A flowchart illustrating an operation of an integrating feature point computing section according to the first embodiment of the present invention.

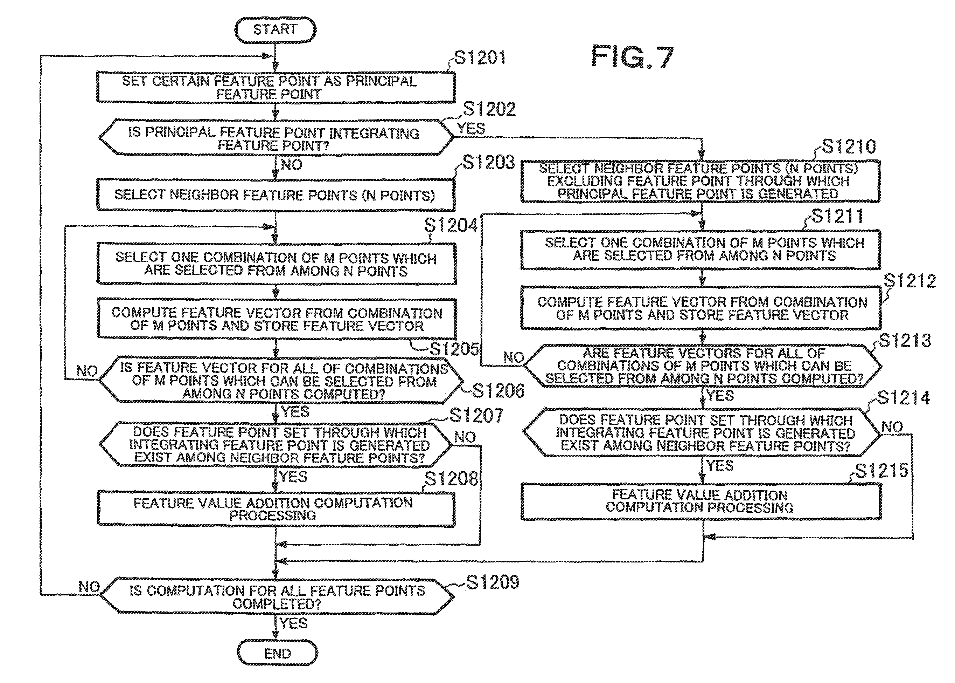

{ Fig. 7} A flowchart illustrating an operation of a registered image feature value computing unit according to the first embodiment of the present invention.

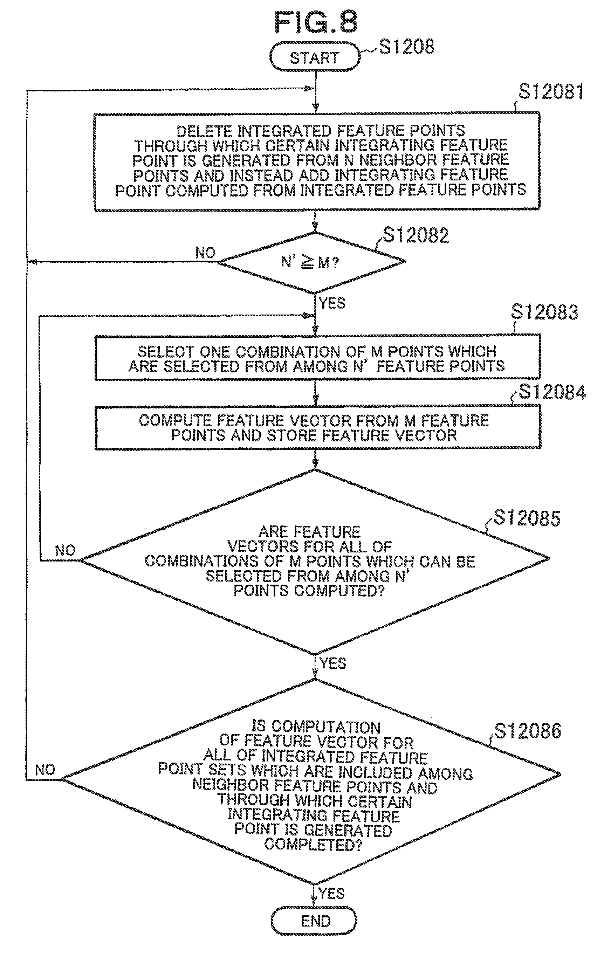

{ Fig. 8} A flowchart illustrating feature value addition computation processing of the registered image feature value computing unit according to the first embodiment of the present invention.

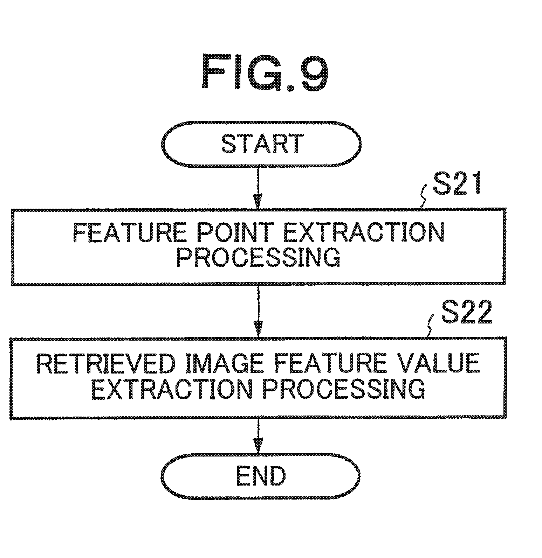

{ Fig. 9} A flowchart illustrating an operation of the retrieved image feature value computing device according to the first embodiment of the present invention.

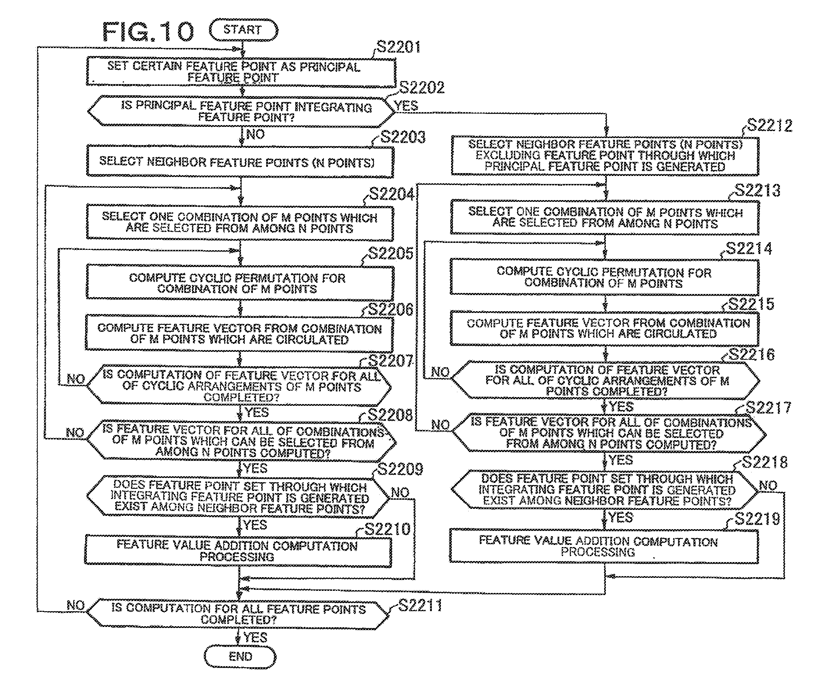

{ Fig. 10} A flowchart illustrating an operation of a retrieved image feature value computing unit according to the first embodiment of the present invention.

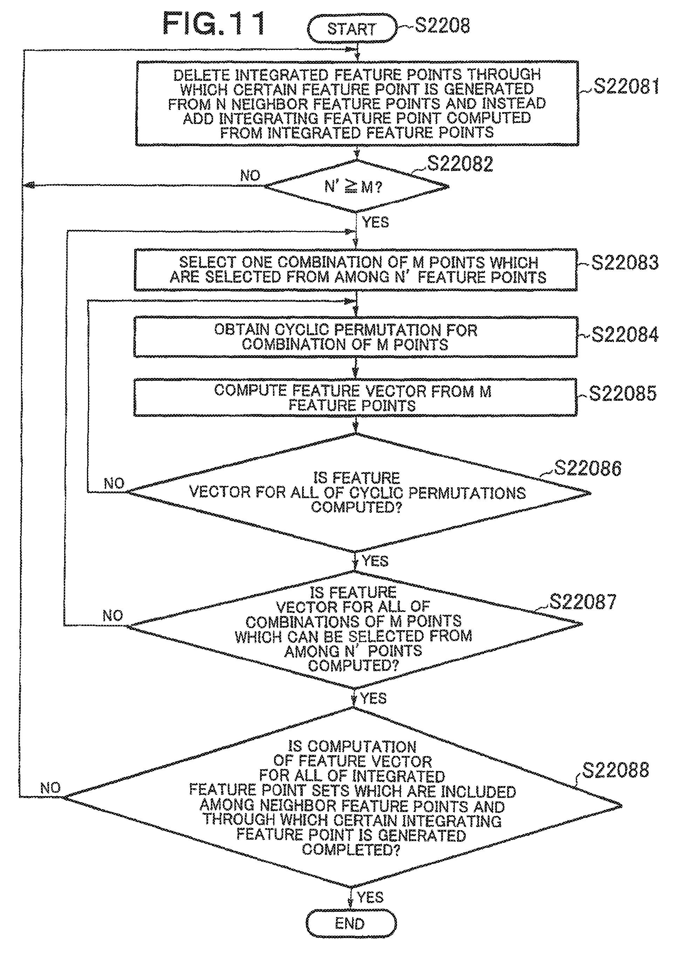

{ Fig. 11} A flowchart illustrating feature value addition computation processing of the retrieved image feature value computing unit according to the first embodiment of the present invention.

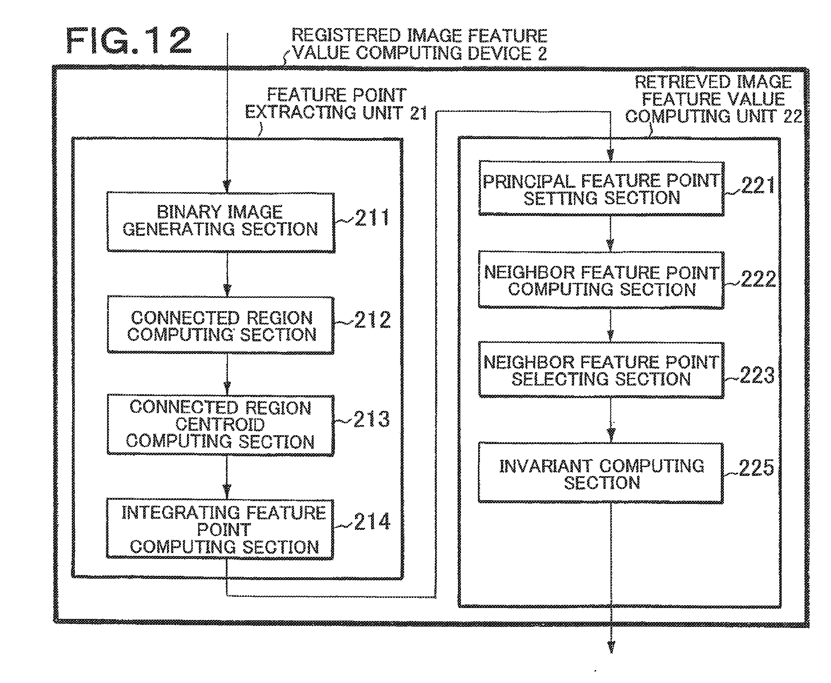

{ Fig. 12} A block diagram illustrating a configuration of a retrieved image feature value computing device according to a second embodiment of the present invention.

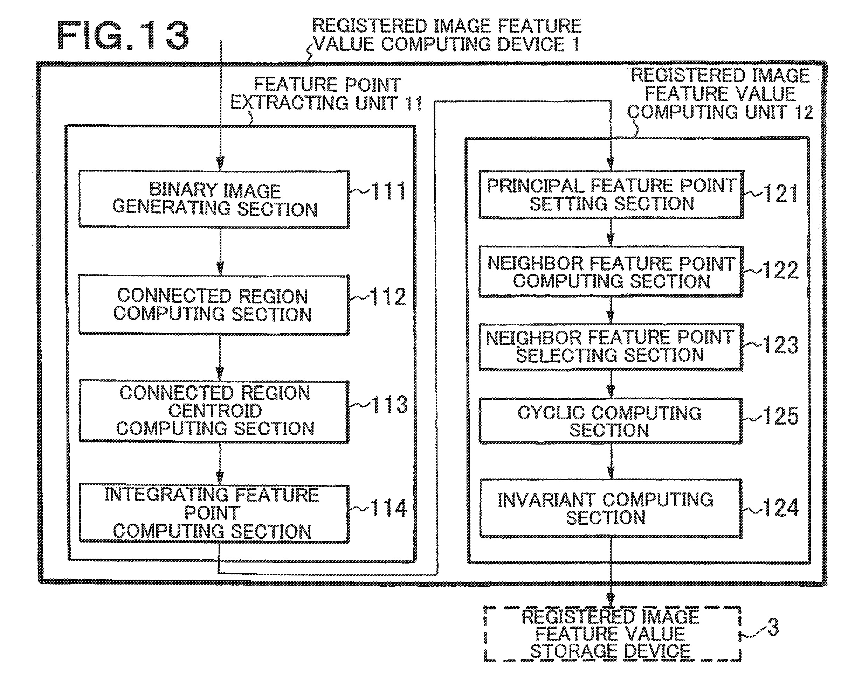

{ Fig. 13} A block diagram illustrating a configuration of a registered image feature value computing device according to a third embodiment of the present invention.

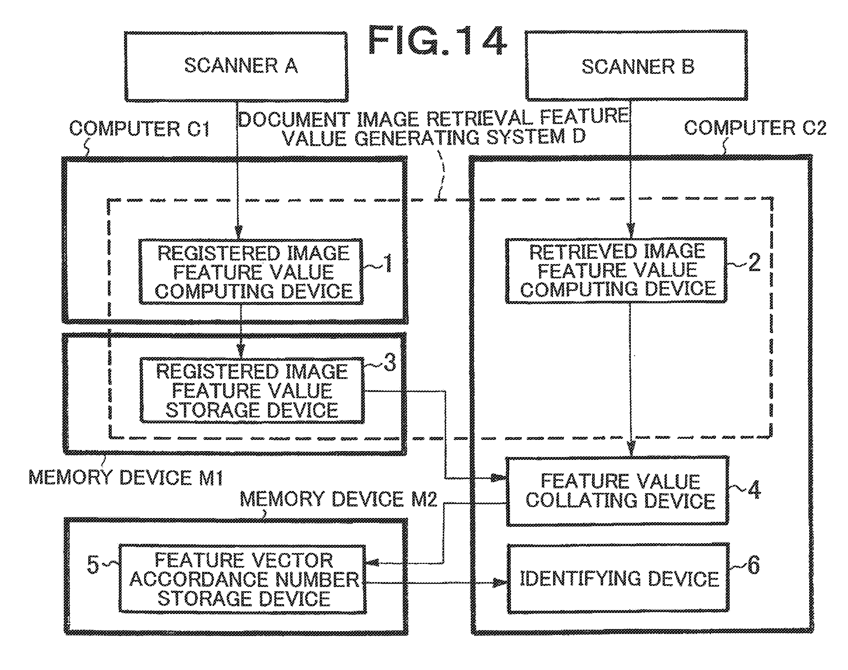

{ Fig. 14} A block diagram illustrating a configuration of a document image retrieval feature value generating system as a first example according to the first embodiment of the present invention.

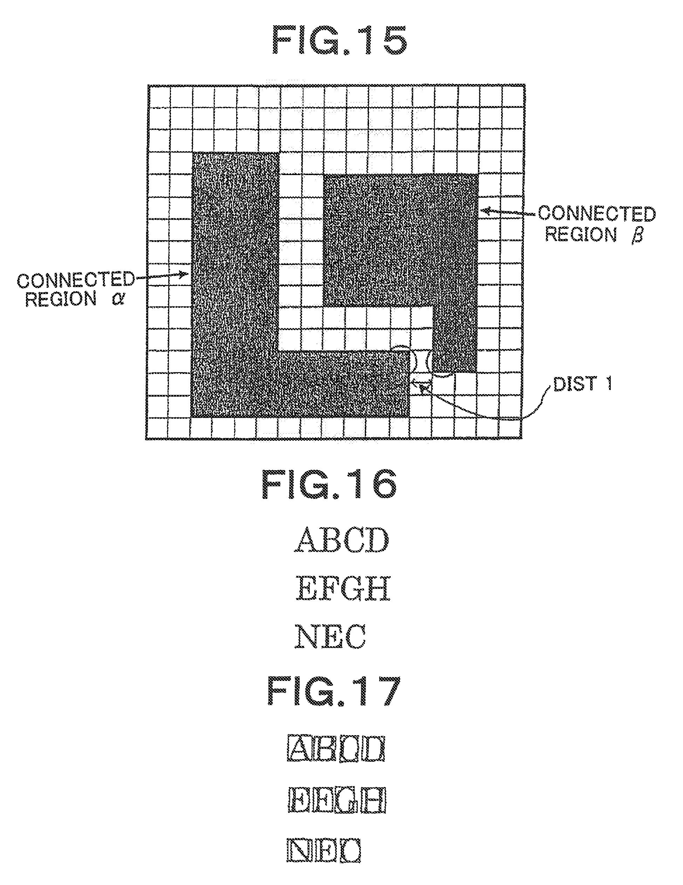

{ Fig. 15} A view to describe a distance between connected regions according to the first example of the present invention.

{ Fig. 16} A view illustrating a registered image PR1A according to the first example of the present invention.

{ Fig. 17} A view illustrating a computation result of a connected region computing section for the registered image PR1A according to the first example of the present invention.

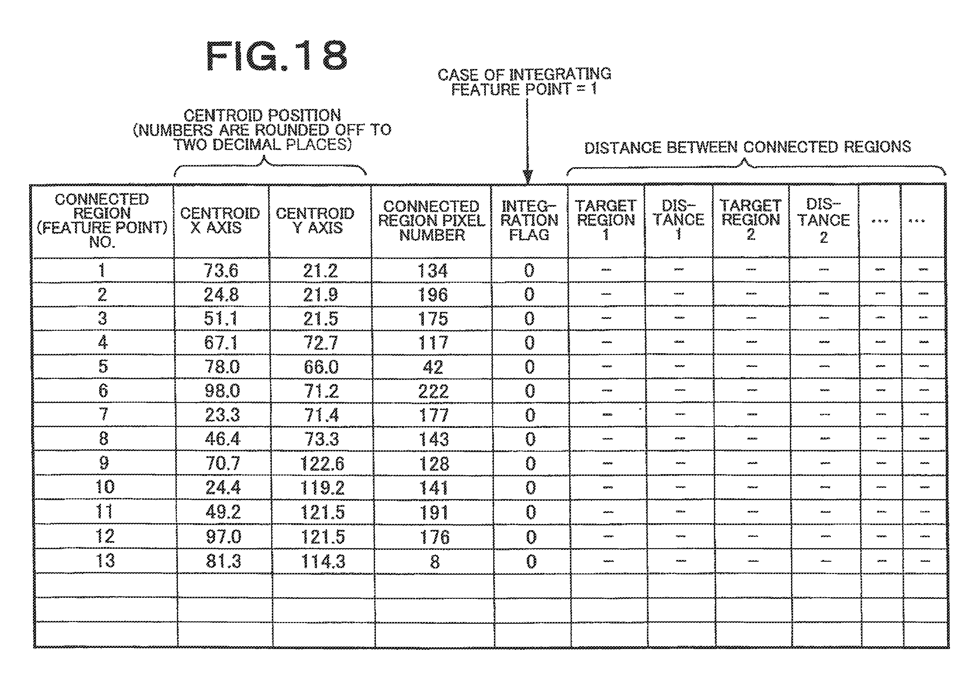

{ Fig. 18} A view illustrating a process of feature point extraction processing for the registered image PR1A according to the first example of the present invention.

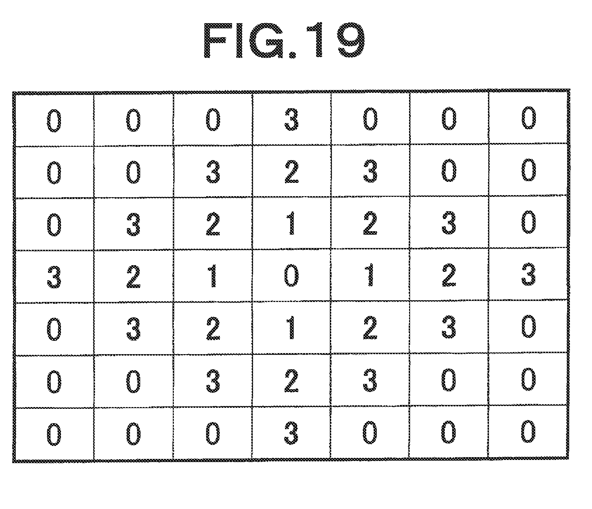

{ Fig. 19} A view illustrating a filter for computing a distance between connected regions for the registered image PR1A according to the first example of the present invention.

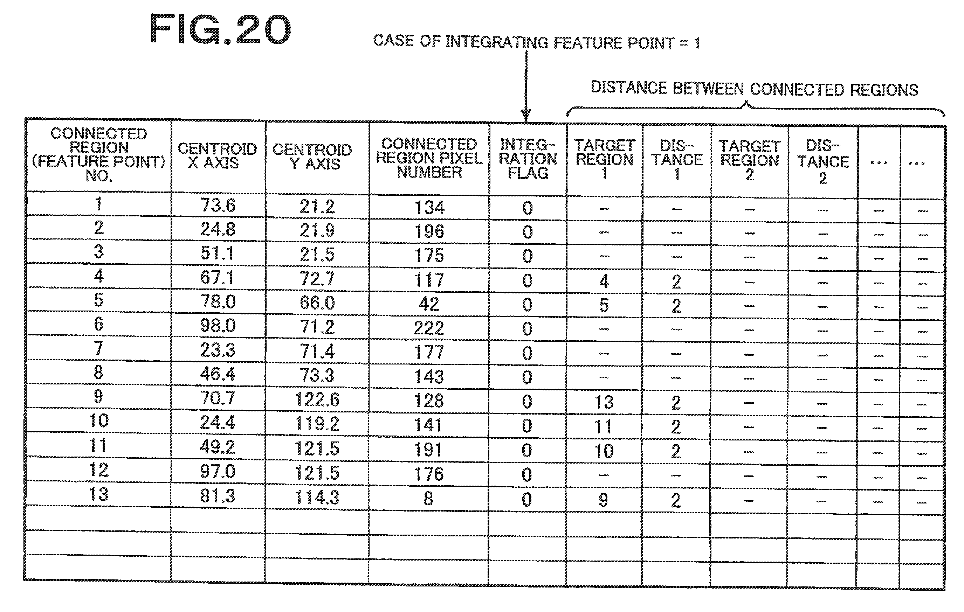

{ Fig. 20} A view illustrating a process of feature point extraction processing when computation of a distance between connected regions is completed for the registered image PR1A according to the first example of the present invention.

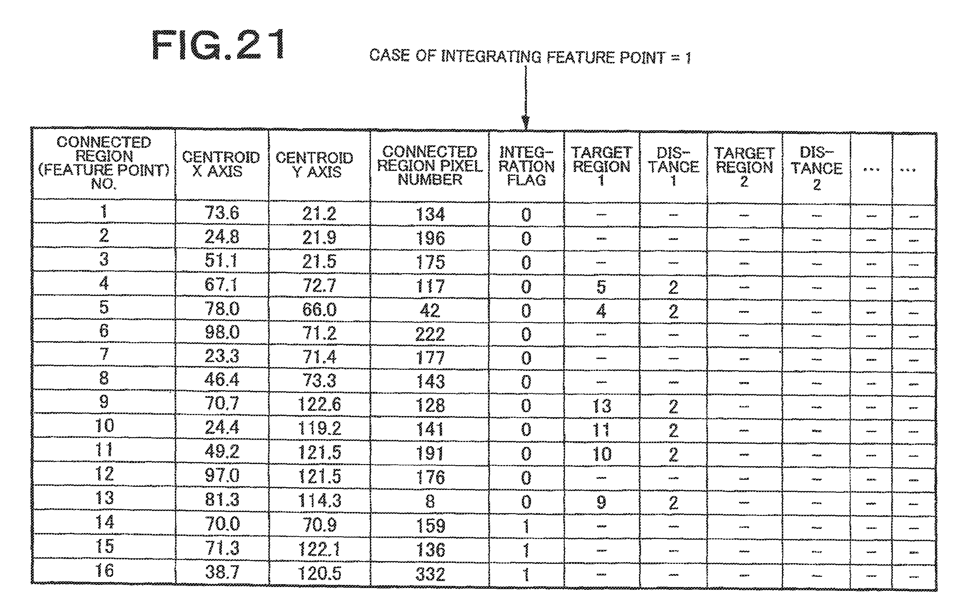

{ Fig. 21} A view illustrating a process of feature point extraction processing when integrating feature point computation processing is finished for the registered image PR1A according to the first example of the present invention.

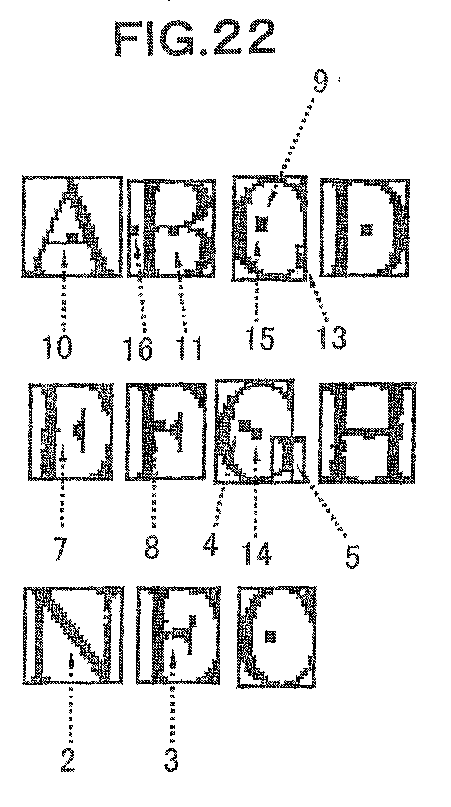

{ Fig. 22} A view illustrating a result of feature point extraction processing for the registered image PR1A according to the first example of the present invention.

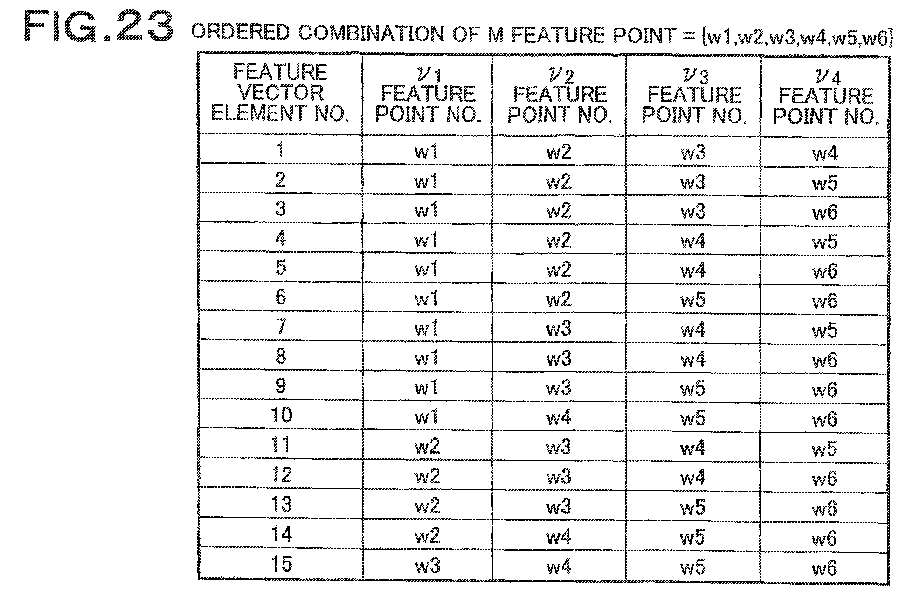

{ Fig. 23} A view to describe a relationship of values computed by an invariant computing section and a cyclic computing section and a feature value (vector) element number in computing an ordered combination which is computed by a neighbor feature point selecting section of the registered image feature value computing unit and a cyclic computing section of the retrieved image feature value computing unit and a feature value (vector) which is generated by the registered image feature value computing unit and the retrieved image feature value computing unit according to the first example of the present invention.

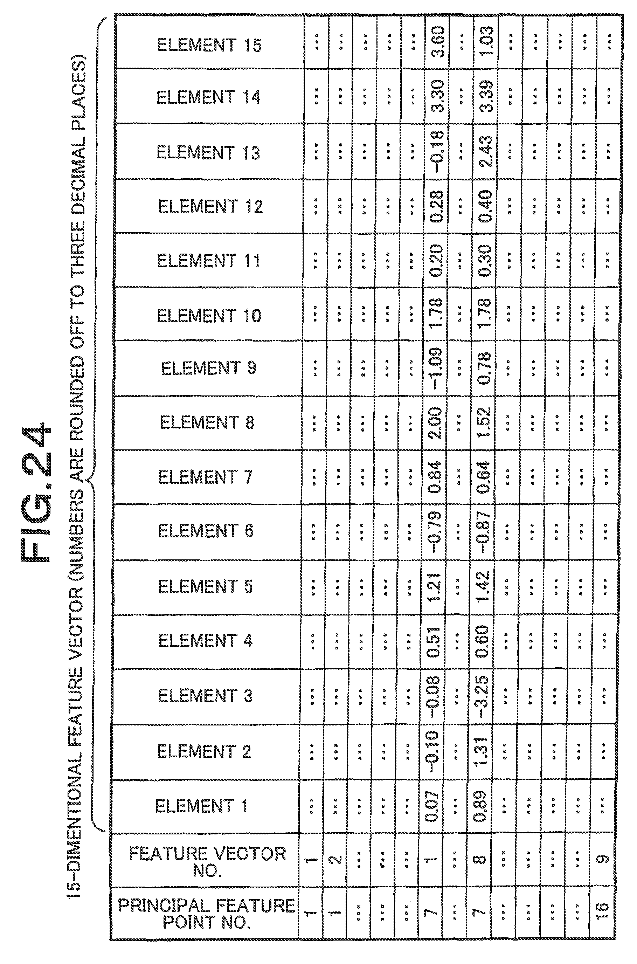

{ Fig. 24} A view to describe a feature value (vector) generating result by the registered image feature value computing device for the registered image PR1A according to the first example of the present invention.

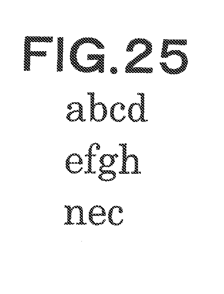

{ Fig. 25} A view illustrating a registered image PR2A according to the first example of the present invention.

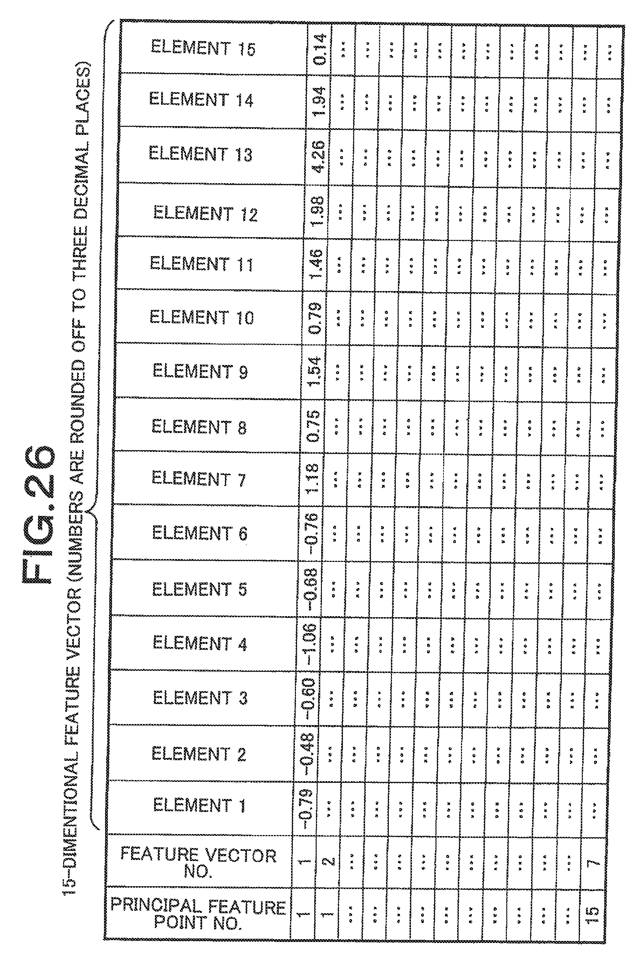

{ Fig. 26} A view to describe a feature value (vector) generating result by the registered image feature value computing device for the registered image PR2A according to the first example of the present invention.

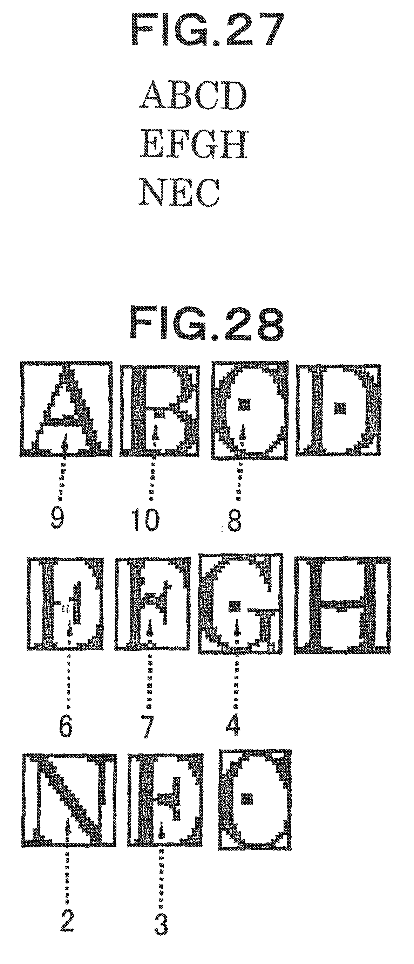

{ Fig. 27} A view illustrating a registered image PR1B according to the first example of the present invention.

{ Fig. 28} A view to describe a result of feature point extraction processing for the registered image PR1B according to the first example of the present invention.

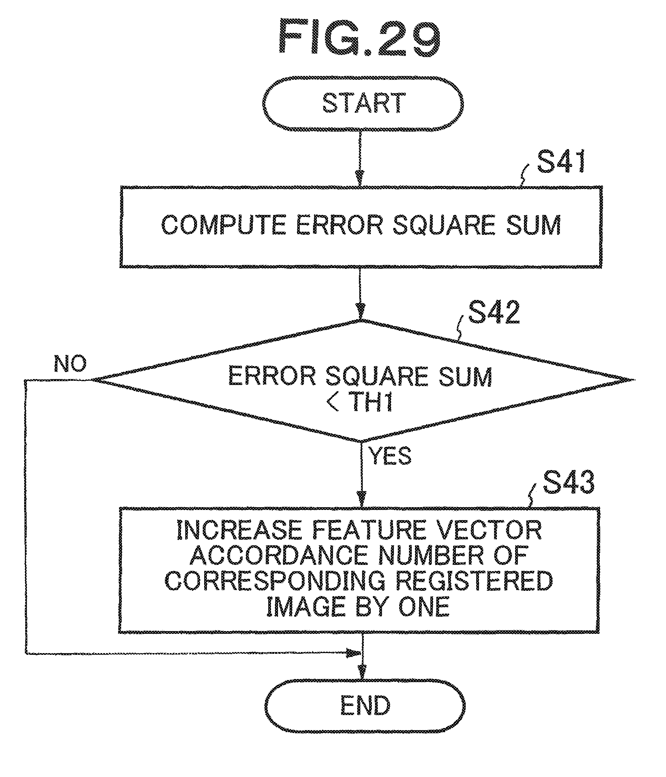

{ Fig. 29} A flowchart illustrating an operation of a feature value collating device according to the first example of the present invention.

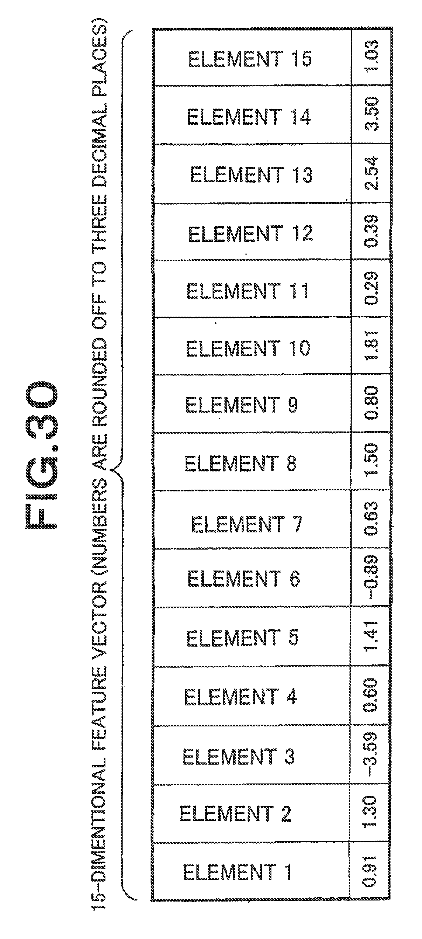

{ Fig. 30} A view to describe a feature value (vector) generating result by the retrieved image feature value computing device for the registered image PR1B according to the first example of the present invention.

{ Fig. 31} A block diagram illustrating a configuration of a document image retrieval feature value generating system R according to a conventional art.

{ Fig. 32} A block diagram illustrating a registered image feature value computing device, a feature point extracting unit, and a registered image feature value computing unit according to the conventional art.

{ Fig. 33} A flowchart illustrating an operation of the registered image feature value computing device according to the conventional art.

{ Fig. 34} A flowchart illustrating an operation of feature point extraction processing according to the conventional art.

{ Fig. 35} A flowchart illustrating registered image feature value extraction processing of the registered image feature value computing unit according to the conventional art.

{ Fig. 36} A view to select and describe a combination according to the conventional art.

{ Fig. 37} A view to describe 7 15-dimentional feature vectors according to the conventional art.

{ Fig. 38} A block diagram illustrating of a configuration of a retrieved image feature value computing device, a feature point extracting unit, and a retrieved image feature value computing unit according to the conventional art.

{ Fig. 39} A flowchart illustrating an operation of the retrieved image feature value computing device according to the conventional art. { Fig. 40} A flowchart illustrating an operation of the retrieved image feature value computing unit according to the conventional art.

{Reference Signs List}

| A, B: | Scanner |
|---|---|
| C1, C2: | Computer |
| M1, M2: | Memory device |
| D, R: | Document image retrieval feature value generating system |
| 1, R1: | Registered image feature value computing device |
| 2, R2: | Retrieved image feature value computing device |
| 3, R3: | Registered image feature value storage device |
| 4: | Feature value collating device |
| 5: | Feature vector accordance number storage device |
| 6: | Identifying device |
| 11, R11: | Feature point extracting section of registered image feature value computing device |
| 21, R21: | Feature point extracting section of retrieved image feature value computing device |
| 22, R22: | Retrieved image feature value computing unit |
| 111, R111: | Binary image generating section of registered image feature value computing device |
| 112, R112: | Connected region computing section of registered image feature value computing device |
| 113, R113: | Connected region centroid computing section of registered image feature value computing device |
| 114: | 114: Integrating feature point computing section of registered image feature value computing device |
| 12, R12: | Registered image feature value computing unit |
| 121, R121: | Principal feature point setting section of registered image feature value computing unit |
| 122, R122: | Neighbor feature point computing section of registered image feature value computing unit |
| 123, R123: | Principal feature point selecting section of registered image feature value computing unit |
| 124, R124: | Invariant computing section of registered image feature value computing unit |
| 125: | Cyclic computing section of registered image feature value computing unit |

| 211, R211: | Binary image generating section of retrieved image feature value computing device |
|---|---|
| 212, R212: | Connected region computing section of retrieved image feature value computing device |
| 213, R213: | Connected region centroid computing section of retrieved image feature value computing device |
| 214: | Integrating feature point computing section of retrieved image feature value computing device |
| 221, R221: | Principal feature point setting section of retrieved image feature value computing unit |
| 222, R222: | Neighbor feature point computing section of retrieved image feature value computing unit |
| 223, R223: | Principal feature point selecting section of retrieved image feature value computing unit |
| 224, R224: | Cyclic computing section of retrieved image feature value computing unit |
| 225, R225: | Invariant computing section of retrieved image feature value computing unit |

{Description of Embodiments}

Hereinafter, embodiments of the present invention will be described in detail with reference to the accompanying drawings.

(First embodiment)

(1) An overall configuration of a document image retrieval feature value generating system D

Referring to FIG. 1, according to a first embodiment of the present invention, a document image retrieval feature value generating system D includes a registered image feature value computing device 1, a retrieved image feature value computing device 2 and a registered image feature value storage device 3.
(1-1) A circuit configuration of the registered image feature value computing device 1
Referring to FIG. 2, the registered image feature value computing device 1 includes a feature point extracting unit 11 and a registered image feature value computing unit 12.
The feature point extracting unit 11 includes a binary image generating section 111, a connected region computing section 112, a connected region centroid computing unit 113, and an integrating feature point computing section 114.
The binary image generating section 111 generates a binary image from a certain image which is input.
In detail, for example, when an input image is a gray scale image, binarization is performed using a pixel having a pixel value of a predetermined range and a pixel having a pixel value of a range other than the predetermined range like binarization using a predetermined threshold value or adaptive binarization, that is, an existing binarization method is used.
Meanwhile, when an input is a color image, it may be converted into a gray scale image using an existing method, and then binarization for the gray scale image may be performed. Also, when an input image is a color image, a method for obtaining a color spatial distribution of a pixel value, clustering a color space and performing binarization into one or more clustering regions and the remaining regions may be used.
The connected region computing section 112 performs connected region labeling when the binary image generated by the binary image generating section 111 is input. In the first embodiment, when performing connected region labeling, labeling is performed using an existing method such as run-analysis and boundary tracking which are described in Non Patent Literature 3.
Connected region labeling is not limited to run analysis or boundary tracking, and may be performed in such a way that, for the input binary image, the same label is imparted to a pixel which belongs to the same connected region, and a different label is imparted to a pixel which belongs to a different connected region.
Also, as described in Non Patent Literature 1, before performing connected region labeling, an existing image processing method may be performed, and a region corresponding to a word region may be acquired.
The connected region centroid computing section 113 computes a centroid of a pixel set which belongs to the same label computed by the connected region computing section 112 and uses the centroid as a feature point.
The integrating feature point computing section 114 selects a plurality of regions to which different labels are imparted, and obtains a new feature point (hereinafter, referred to as an integrating feature point) which can be acquired by integrating a plurality of selection regions of connected regions to which different labels are imparted and a new pixel number from feature points (hereinafter, referred to as integrated feature points) computed from the connected regions and a pixel number of the connected regions.
In order to determine connected regions to be integrated, a set of connected regions which are close to each other are selected. In order to determine whether or not connected regions are close to each other, a minimum value of a distance between centroids or a distance from a connected region belonging to a corresponding label to a connected region belonging to a different label as a distance criterion is used, and connected regions which are within a distance equal to or less than a predetermined value are determined as connected regions which have to be integrated.

As described above, the feature point extracting unit 11 includes the binary image generating section 111, the connected region computing section 112, the connected region centroid computing section 113, and the integrating feature point computing section 114 and thus has a function of extracting a feature point from an input image which is input.

Next, the registered image feature value computing unit 12 will be described.

The registered image feature value computing unit 12 includes a principal feature point setting section 121, a neighbor feature point computing section 122, a neighbor feature point selecting section 123, and an invariant computing section 124.

The principal feature point setting section 121 sets one feature point (hereinafter, referred to as a principal feature point) in computing a feature value.

The neighbor feature point computing section 122 computes and outputs a predetermined number (N) of feature points around the principal feature point.

The neighbor feature point selecting section 123 selects a predetermined number (M) of feature points from among neighboring feature points computed by the neighboring feature point computing section 122. At this time, an integrating feature point and a feature point from which an integrating feature point is generated are not simultaneously selected.

The selected feature points are ordered in a predetermined direction, that is, either clockwise or counterclockwise, starting from a feature point nearest to a principal feature point as if an imaginary half line which connects the principal feature point with the feature point nearest to the principal feature point rotates centering on the principal feature point.

The invariant computing section 124 generates a feature value (vector) from a feature point set selected by the neighbor feature point selecting section 123 by storing geometric invariants which become elements in a predetermined order.

At this time, each element of a feature value (vector) is a predetermined geometric invariant. As the geometric invariant, there are a similarity invariant, an affine invariant and a perspective invariant as described in Non Patent Literature 2. The feature vector is stored in the registered image feature value storage device 3.

As described above, the registered image feature value computing unit 12 includes the principal feature point setting section 121, the neighbor feature point computing section 122, the neighbor feature point selecting section 123, and the invariant computing section 124, and computes a feature value (vector) using feature points output from the feature point extracting unit 11 and a connected region pixel number and stores the feature value (vector) in the registered image feature value storage device 3.

Next, the retrieved image feature value computing device 2 will be described with reference to FIG. 3.

A circuit configuration of the retrieved image feature value computing device 2

Referring to FIG. 3, the retrieved image feature value computing device 2 includes a feature point extracting section 21 and a retrieved image feature value computing unit 22.

The feature point extracting unit 21 includes a binary image generating section 211, a connected region generating section 212, a connection region centroid computing section 213, and an integrating feature point computing section 214.

The feature point extracting unit 21 of the retrieved image feature value computing device 2 has the same configuration as the feature point extracting unit 11 of the registered image feature value computing device 1, and thus duplicated description will not be repeated.

Next, the retrieved image feature value computing unit 22 will be described.

The retrieved image feature value computing unit 22 includes a principal feature point setting section 221, a neighbor feature point computing section 222, a neighbor feature point selecting section 223, a cyclic computing section 224, and an invariant computing section 225.

The principal feature point setting section 221, the neighbor feature point computing section 222, the neighbor feature point selecting section 223 of the retrieved image feature value computing unit 22 have the same configuration as the principal feature point setting section 121, the neighbor feature point computing section 122, and the neighbor feature point selecting section 223 of the registered image feature value computing unit 12 (FIG. 2), respectively, and thus duplicated description will not be repeated.

The cyclic computing section 224 receives an ordered feature point set output from the neighbor feature point selecting section 223, and circulates and changes an order of a feature point set.

The invariant computing section 225 of the retrieved image feature value computing device 2 is identical to the invariant computing section 124 of the registered image feature value computing unit 12 (FIG. 2), and thus duplicated description will not be repeated.

Accordingly, the retrieved image feature value computing unit 22 computes a feature value (vector) using feature points output from the feature point extracting unit 21 and a connected region pixel number.

The registered image feature value storage device 3 (FIG. 1) is a device which stores a feature value (vector) generated by the registered image feature value computing device 1 as described above and a connected region pixel number.

(2) A processing sequence of the document image retrieval feature value generating system D

(2-1) A processing sequence of the registered image feature value computing device 1
Next, an overall operation of the first embodiment will be sequentially described in detail with reference to flowcharts of FIGs. 4 to 11.
First, referring to a flowchart of FIG. 4, when a multi-value image is input to the registered image feature value computing device 1, the document image retrieval feature value generating system D performs feature point extraction processing through the feature point extracting unit 11 of the registered image feature value computing device 1 (FIG. 2) (step 811).
When feature point extraction processing of the feature point extracting unit 11 is completed, the registered image feature value computing unit 12 (FIG. 2) performs registered image feature value computation processing (step S12).
Next, feature point extraction processing (step S11) and registered image feature value computation processing (step S12) will be described in detail with reference to flowcharts.
FIG. 5 is a flowchart illustrating feature point extraction processing of step S11.
First, the binary image generating section 111 of the registered image feature value computing device 1 (FIG. 2) generates a binary image (step S111).
Next, the connected region generating section 112 (FIG. 2) performs connected region labeling (step S112). In the first embodiment, labeling processing using, for example, 4-connection run analysis described in Non Patent Literature 3 is performed for the generated binary image.
The connected region centroid computing section 113 computes a centroid location and a pixel number of each connected region (step S113).
Then, the integrating feature point computing section 114 obtains an integrating feature point from feature points which are in the neighborhood of each other and a pixel number of integrated connected regions (step S114). As a distance criterion used to determine the neighborhood, an existing distance criterion such as a Euclidean distance and a city block distance between feature points may be used.
Here, for example, in order to determine whether or not feature points are in the neighborhood of each other, a method for allowing a distance between connected regions not to exceed a threshold value TH1 may be used. A predetermined value may be used as TH1, or normalization in which line cutting is performed to obtain a baseline, and then a width of a connected component obtained by projecting a connected component onto the baseline is obtained, and TH1 is divided by a value of the width may be performed.
Processing of obtaining the size of the connected region (which is referred to a integrating feature point computation processing) through the integrating feature point computing section 114 will be described with reference to a flowchart of FIG. 6. Referring to FIG. 6, an operation of the integrating feature point computing section 114 is as follows.
First, the integrating feature point computing section 114 obtains a distance between connected regions for a connected region labeling image (which is referred to inter-connected region distance computation processing) (step S1141).
Here, an existing criterion such as a Euclidean distance and a city block distance is used as a criterion of the distance. An inter-connected region distance is obtained by an inter-centroid distance. {0138} As another method for defining an inter-connected region distance, a minimum value of a distance criterion d for an arbitrary image of a connected region CC1 and an arbitrary pixel of a different connected region CC2 may be defined by Formula 2:

$$\{\text{Formula 2}\}$$

$$Dist1 = \min_{(x_i, y_i) \in CC1, (x_j, y_j) \in CC2} d\left((x_i, y_i), (x_j, y_j)\right) \quad \ldots (2)$$

Next, an integrated feature point is determined, a centroid of an integrating feature point is computed, and a sum of a pixel number of connected regions which are integrated is used as a pixel number corresponding to the integrating feature point (step S1142).

In this case, as a method for integrating two connected regions, there are, for example, a method for integrating a pair of arbitrary connected regions and a method for integrating a pair of connected regions of equal to or less than a distance D.

Also, a method for integrating three or more arbitrary connected regions may be applied. In the case in which connected regions of equal to or less than the distance D are simply integrated, three connected regions may be integrated, for example, when a distance between a connected component 1 and a connected component 2 is equal to or less than the distance D and a distance between a connected component 2 and a connected component 3 is equal to or less than the distance D.

Similarly, up to a predetermined number A of connected regions may be integrated. Here, a value of A may be previously determined.

As described above, the feature point extracting unit 11 of the registered image feature value computing device 1 can compute a feature point, an integrating feature point and a pixel number corresponding to each connected region through feature point extraction processing (FIG. 4) of step S11.

When feature point extraction processing of step S11 of the flowchart of FIG. 4 through the feature point extracting unit 11 is completed, registered image feature value extraction processing of step S12 is performed through the registered image feature value computing unit 12 (step S12 of FIG. 4).

Next, an operation of the registered image feature value computing unit 12 which performs registered image feature value extraction processing (step S12 of FIG. 4) will be described with reference to a flowchart of FIG. 7.

A background technology and duplicated processing will be described focusing on an operation necessary for understanding processing.

First, the principal feature point setting section 121 (FIG. 2) installed in the registered image feature value computing unit 12 sets a certain feature point as a principal feature point (step S1201).

Next, the neighbor feature point computing section 122 determines whether or not the principal feature point is the integrating feature point (step S1202).

Here, when the principal feature point which is set is the integrating feature point, processing of step 1210 and subsequent steps is performed, while when the principal feature point which is set is not the integrating feature point, processing of step S1203 and subsequent steps is performed.

First, when the principal feature point which is set is not the integrating feature point, the procedure proceeds to step S1203, and the neighbor feature point computing section 122 selects N feature points which are near in distance from among feature points excluding the principal feature point and the integrating feature point (step S1203).

Next, the neighbor feature point selecting section 123 obtains combinations of M feature points which are selected from among N feature points and selects one combination (step S1204). At this time, M feature points are appropriately ordered as described above.

The invariant computing section 124 computes invariants, which can be computed from $f$ feature point coordinates, from M feature points which are ordered and stores elements in a predetermined order (step S1205).

Processing of step S1204 and step S1205 illustrated in FIG. 7 is performed for all of combinations of M points which can be selected from among N points selected in step S1203.

In step S1206, it is determined whether or not computation of a feature vector for all of combination of M points which can be selected from among N points is completed.

Here, when computation of a feature vector even for one of M neighbor feature points is not completed, the procedure returns to step S1204, and so neighbor feature points of a feature vector which is not computed yet are selected, and then computation of a feature vector is performed.

Accordingly, feature vectors for all combinations of M points which can be selected from among N points are computed.

Next, it is determined whether or not all of feature point sets through which a certain integrating feature point is generated are included among N feature points selected in step S1203 (step S1207).

Here, when all of feature point sets through which a certain integrating feature point, is generated exist, feature value addition computation processing is performed (step S1208).

However, when all of feature point sets through which a certain integrating feature point is generated are not included, the procedure proceeds to step S1209.

Feature value addition computation processing of step S1208 will be described later with reference to a flowchart of FIG. 8.

After the procedure proceeds to step S1209, it is determined whether or not computation of a feature value for all feature points is completed, and when computation of a feature value for all feature points is completed, registered image feature value extraction processing (step S12 of FIG. 4) is finished.

Meanwhile, when it is determined in step S1209 that computation of a feature value for all feature points is not completed yet, the procedure returns to step S1201, and so a feature vector is computed using a feature point which is not computed yet as a principal feature point.

Also, when it is determined in step S1202 that the principal feature point which is set is the integrating feature point, the procedure proceeds to step S1210, and the following operation is performed.

The neighbor feature point computing section 122 (FIG. 2) selects N feature points which are near in distance from among feature points excluding a principal feature point, an integrated feature point through which the principal feature point is generated, and the integrating feature point (step S1210).

Next, the neighbor feature point selecting section 123 obtains combinations of M feature points which are selected from among N feature points and selects one combination (step S1211). At this time, M feature points are appropriately ordered as described above.

Next, the invariant computing section 124 computes invariants, which can be computed from f feature point coordinates, from M feature points which are ordered and stores elements in a predetermined order (step S1212).

Processing of step S1211 and step S1212 is performed for all of combinations of M points which can be selected from among N points selected in step S1210.

In step S1213, it is determined whether or not computation of a feature vector for all of combination of M points which can be selected from among N points is completed.

Here, when computation of a feature vector even for one of M neighbor feature points is not completed, the procedure returns to step S1211, and so neighbor feature points of a feature vector which is not computed yet are selected, and then computation of a feature vector is performed.

Accordingly, feature vectors for all combinations of M points which can be selected from among N points are computed.

Next, in step S1214, it is determined whether or not all of feature point sets through which a certain integrating feature point is generated are included among N feature points selected (step S1214).

Here, when all of feature point sets through which a certain integrating feature point is generated exist, feature value addition computation processing is performed (step S1215).

However, when all of feature point sets through which a certain integrating feature point is generated are not included, the procedure proceeds to step S1209.

Feature value addition computation processing (step S1215) is identical to that of step S1208 and will be described later. After feature value addition computation processing (step S1215) is finished, the procedure proceeds to step S1209.

Finally, in step S1209, it is determined whether or not processing is performed using all feature points as a principal feature point. Here, as described above, when processing has not been performed yet using all feature points as a principal feature point, the procedure returns to step S1201, while when processing of computing a feature vector has been performed using all feature points as a principal feature point, registered image feature value extraction processing (step S12 of FIG. 4) is finished.

(2-2) A feature value addition computation processing sequence of the registered image feature value computing device 1

A feature value addition computation processing sequence of step S1208 or S1215 described above will be described with reference to a flowchart of FIG. 8.

First, the neighbor feature point selecting section 123 (FIG. 2) of the registered image feature value computing unit 12 deletes integrated feature points through which a certain integrating feature point is generated from N neighbor feature points computed by the neighbor feature point computing section 122 and instead adds an integrating feature point computed from the integrated feature points (step S12081). At this time, a total number of neighbor feature points is denoted by N'.

If $N' \geq M$, the procedure proceeds to step S12083, while if $N' < M$, the procedure returns to step S12081.

In step S12083, the neighbor feature point selecting section 123 obtains one combination of M feature points which are selected from among N' feature points. Here, similarly to step S1204 (FIG. 7), appropriate ordering is performed.

Subsequently, the invariant computing section 124 computes invariants, which can be computed from f feature point coordinates, from M feature points which are ordered and stores elements in a predetermined order (step S12084).

Processing of step S12083 and step S12084 is repeated until processing for all combinations of M feature points which are selected from among N' feature points is performed.

In step S12085, it is determined whether or not computation of a feature vector for all of combination of M points which can be selected from among N' points is completed.

Here, when computation of a feature vector even for one of M neighbor feature points is not completed, the procedure returns to step S12083, and so neighbor feature points of a feature vector which is not computed yet are selected, and then computation of a feature vector which is not computed yet is performed.

Accordingly, feature vectors for all combinations of M points which can be selected from among N' points are computed.

In step S12086, it is determined whether or not computation of a feature vector for all of integrated feature point sets which are included in neighbor feature points and through which a certain integrating feature point is generated is completed.

When computation of a feature vector for all of integrated feature point sets which are included in neighbor feature points and through which a certain integrating feature point is generated is not completed, the procedure returns to step S12081, and then computation of a feature vector for a feature point set which is not computed yet is performed.

Therefore, feature value addition computation processing of step S1208 or S1215 is repeated until feature value addition computation processing for an integrating feature point included among N' feature points computed by the neighbor feature point computing section 122 is performed, so that all feature vectors are computed.

As described above, after invariants are repetitively computed for all of integrated feature point sets which are included among neighbor feature points and through which a certain integrating feature point is generated as described above and so repetitive processing is finished, the procedure proceeds to step S1209.

(2-3) A processing sequence of the retrieved image feature value computing device 2

Next, an operation of the retrieved image feature value computing device 2 will be described. This operation is mostly identical to operation of the registered image feature value computing device 1 and thus will be described in detail focusing on a different point from the operation of the registered image feature value computing device 1.

Referring to a flowchart of FIG. 9, when a multi-value image is input to the retrieved image feature value computing device 2, the document image retrieval feature value generating system D performs feature point extraction processing through the feature value extracting unit 21 (FIG. 3) (step S21).

This is the completely same processing as feature point extraction processing (step S11 of FIG. 4) of the operation of the registered image feature value computing device 1.

When feature point extraction processing (step S21 of FIG. 4) is finished, the retrieved image feature value computing unit 22 performs retrieved image feature value computation processing (step S22).

Retrieved image feature value computation processing (step S22) of the retrieved image feature value computing unit 22 will be described in detail with reference to a flowchart of FIG. 10.

First, the principal feature point setting section 221 (FIG. 3) installed in the retrieved image feature value computing unit 22 sets a certain feature point as a principal feature point (step S2201).

Next, the neighbor feature point computing section 222 determines whether or not the principal feature point is the integrating feature point (step S2202).

Here, when the principal feature point which is set is the integrating feature point, processing of step 2212 and subsequent steps is performed, while when the principal feature point which is set is not the integrating feature point, processing of step S2203 and subsequent steps is performed.

First, when the principal feature point which is set is not the integrating feature point, the procedure proceeds to step S2203, and the neighbor feature point computing section 222 selects N feature points which are near in distance from among feature points excluding the principal feature point and the integrating feature point (step S2203).

Next, the neighbor feature point selecting section 223 (FIG. 3) obtains combinations of M feature points which are selected from among N feature points and selects one combination (step S2204). At this time, M feature points are appropriately ordered as described above.

The neighbor feature point selecting section 223 computes one cyclic permutation from an ordered combination of M points (step S2205).

The invariant computing section 225 computes invariants, which can be computed from f feature point coordinates, from M feature points which are ordered and stores elements in a predetermined order (step S2206).

Processing of step S2205 and step S2206 is performed for all of cyclic permutation combinations computed from M points.

In step S2207, it is determined whether or not computation of a feature vector for all of cyclic arrangements of M points is completed.

Here, when computation of a feature vector even for one of M neighbor feature points is not completed, the procedure returns to step S2205, and so computation of a feature vector of a cyclic arrangement which is not computed yet is performed.

Meanwhile, when computation of a feature vector for all cyclic arrangements of M points is completed, the procedure proceeds to step S2208, and so it is determined whether or not computation of a feature vector for all combinations of M points which can be selected from among N points is completed.

Here, when computation of a feature vector for all combinations of M points which can be selected from among N points is not completed, the procedure proceeds to step S2204, and so a feature vector for a combination of M points which is not selected yet is computed.

However, when computation of a feature vector for all combinations of M points which can be selected from among N points is completed, the procedure proceeds to step S2209.

Next, it is determined whether or not all of feature point sets through which a certain integrating feature point is generated are included among N feature points selected in step S2203 (step S2209).

Here, when all of feature point sets through which a certain integrating feature point is generated exist, feature value addition computation processing is performed (step S2210).

However, when all of feature point sets through which a certain integrating feature point is generated are not included, the procedure proceeds to step S2211.

Feature value addition computation processing of step S2210 will be described later with reference to a flowchart of FIG. 11.

After the procedure proceeds to step S2211, it is determined whether or not computation of a feature value for all feature points is completed, and when computation of a feature value for all feature points is completed, retrieved image feature value extraction processing (step S22) is finished.

Meanwhile, when it is determined in step S2211 that computation of a feature value for all feature points is not completed yet, the procedure returns to step S2201, and so a feature vector is computed using a feature point which is not computed yet as a principal feature point.

Also, when it is determined in step S2202 that the principal feature point which is set is the integrating feature point, the procedure proceeds to step S2212, and the following operation is performed.

The neighbor feature point computing section 222 (FIG. 3) of the retrieved image feature value computing unit 22 selects N feature points which are near in distance from among feature points excluding a principal feature point, an integrated feature point through which the principal feature point is generated, and the integrating feature point (step S2212).

Next, the neighbor feature point selecting section 223 (FIG. 3) obtains combinations of M feature points which are selected from among N feature points and selects one combination (step S2213). At this time, M feature points are appropriately ordered as described above.

Next, the neighbor feature point selecting section 223 (FIG. 3) computes one cyclic permutation from an ordered combination of M points (step S2214).

Next, the invariant computing section 224 computes invariants, which can be computed from f feature point coordinates, from M feature points which are ordered and stores elements in a predetermined order (step S2215).

Processing of step S2214 and step S2215 is performed for all of cyclic permutation combinations computed from M points.

In step S2216, it is determined whether or not computation of a feature vector for all cyclic arrangements of M points is completed.

Here, when computation of a feature vector for all cyclic arrangements of M points is not completed yet, the procedure proceeds to step S2214, and so a feature vector of a cyclic arrangement which is not computed yet is computed.

However, when computation of a feature vector for all cyclic arrangements of M points is completed, the procedure proceeds to step S2217, and so it is determined whether or not computation of a feature vector for all combinations of M points which can be selected from among N points is completed.

When computation of a feature vector for all combinations of M points which can be selected from among N points is not completed yet, the procedure returns to step S2213, and so a feature vector of a combination of M points which is not selected yet is computed.

However, when computation of a feature vector for all the combinations of M points which can be selected from among N points is completed, the procedure proceeds to step S2218.

It is determined whether or not all of feature point sets through which a certain integrating feature point is generated are included among N feature points selected in step S2212 (step S2218).

Here, when all of feature point sets through which a certain integrating feature point is generated exist, feature value addition computation processing (step S2219) is performed (step S2219).

However, when all of feature point sets through which a certain integrating feature point is generated are not included, the procedure proceeds to step S2211.

Feature value addition computation processing (step S2219) is identical to that of step S2210 and will be described later. After feature value addition computation processing is finished, the procedure proceeds to step S2211.

Finally, in step S2211, it is determined whether or not processing is performed using all feature points as a principal feature point.

Here, similarly to the registered image feature value computing device 1, when processing has not been performed using all feature points as a principal feature point, the procedure returns to step S2201, while when processing of computing a feature vector has been performed using all feature points as a principal feature point, retrieved image feature value extraction processing (step S22 of FIG. 9) is finished.

(2-4) A feature value addition computation processing sequence of the retrieved image feature value computing device 2

A feature value addition computation processing sequence of step S2210 or S2219 described above will be described with reference to a flowchart of FIG. 11.

First, the neighbor feature point selecting section 223 (FIG. 3) of the retrieved image feature value computing unit 22 deletes integrated feature points through which a certain integrating feature point is generated from N neighbor feature points computed by the neighbor feature point computing section 222 and instead adds an integrating feature point computed from the integrated feature points (step S22081). At this time, a total number of neighbor feature points is denoted by N'.

If N' ≥ M, the procedure proceeds to step S22083, while if N'< M, the procedure returns to step S22081.

In step S22083, the neighbor feature point selecting section 223 obtains one combination of M feature points which are selected from among N' feature points. Here, similarly to step S2204 (FIG. 10), appropriate ordering is performed.

Subsequently, the neighbor feature point selecting section 223 computes one cyclic permutation from an ordered combination of M points (step S22084).

Next, the invariant computing section 225 (FIG. 3) computes invariants, which can be computed from f feature point coordinates, from M feature points which are ordered and stores elements in a predetermined order (step S22085).

Processing of step S22084 and step S22085 is performed for all cyclic permutations of combinations of M feature points which are ordered.

In step S22086, it is determined whether or not computation of a feature vector for all of cyclic permutations is completed.

Here, when computation of a feature vector even for one of all cyclic permutations of M points is not completed yet, the procedure returns to step S22084, and so computation of a feature vector for a cyclic permutation which is not computed yet is performed.

meanwhile, when a feature vector for all of cyclic permutations is computed, the procedure proceeds to step S22087.

Accordingly, feature vectors for all cyclic permutations are computed. In step S22087, it is determined whether or not computation of a feature vector for all combinations of M points which can be selected from among N' points is completed.

Here, when computation of a feature vector for all combinations of M points which can be selected from among N' points is not completed yet, the procedure returns to step S22083, and so a feature vector for a combination of M points which is not computed yet but selectable is computed.

However, when computation of a feature vector for all combinations of M points which can be selected from among N' points is completed, the procedure proceeds to step S22083.

Processing of from step S22083 to step S22087 is repeated until processing for all combination of M feature points which are selected from among N' feature points is performed.

Accordingly, feature vectors for all combinations of M points which can be selected from among N' points are computed.

In step S22088, it is determined whether or not computation of a feature vector for all of integrated feature point sets which are included in neighbor feature points and through which a certain integrating feature point is generated is completed.

Therefore, processing described above is repeated until computation of a feature vector for all of integrated feature point sets through which a certain integrating feature point is generated is completed.

Therefore, feature value addition computation processing (FIG. 10) of step S2210 or S2219 is repeated until feature value addition computation processing for an integrating feature point included among N feature points computed by the neighbor feature point computing section 222 is performed.

As described above, after invariants are repetitively computed for all of integrated feature point sets which are included among neighbor feature points and through which a certain feature point is generated as described above and so repetitive processing is finished, the procedure proceeds to step S2211.

(3)Effects

According to the first embodiment, a feature point generated by simulating a contact of a connected component is generated by the integration feature point computing section 114 and the integrating feature point computing section 214, a feature point set is computed by the neighbor feature point computing section 122 and the neighbor feature point computing section 222 not to simultaneously select an integrating feature point and an integrated feature point through which the integrating feature point is generated, and a feature value is generated using the feature point set. Therefore, even though connected regions contact in one of a registered image and a retrieved image and are separated in the other image, feature values which correspond to each other can be acquired.

(4) Other embodiments

(4-1) Second embodiment

In the first embodiment described above, the retrieved image feature value generating unit 22 includes the cyclic computing section 224, but according to a second embodiment, the cyclic computing section 224 may not be installed as shown in FIG. 12 when only rotation is considered in an image which is input in advance.

In this case, cyclic computation processing of steps S2205, S2211 and S22084 is not performed.

(4-2) Third embodiment

According to a third embodiment of the present invention, as shown in FIG. 12, the cyclic computing section 224 is not installed in retrieved image feature value computing unit 22 of the retrieved image feature value computing device 2, but a cyclic computing section 125 which is identical to the cyclic computing section 224 may be included in the registered image feature value generating unit 12 as shown in FIG. 13.

This case corresponds to a configuration in which the registered image feature value generating device 1 and the retrieved image feature value generating device are switched with each other.

Processing of steps S2205, S2214 and S22084 is not performed, and instead operations of steps S2205, S2214 and S22084 are performed after steps S1204, S1211 and S12083, respectively, to perform processing for all cyclic combinations for ordered combination.

{Example 1}

Next, best mode operation of implementing the present invention will be described using a concrete example.

As shown in FIG. 14, in a first example according to the first embodiment, the document image retrieval feature value generating system D is introduced as part of a document image retrieving system Z.

The document image retrieving system Z illustrated in FIG. 14 includes a scanner A, a scanner B, a computer C1, a computer C2, a memory device M1, and a memory device M2.

In the first example, the registered image feature value generating device 1 is installed in the computer C1, and the retrieved image feature value generating device 2 is installed in the computer C2.

The registered image feature value storage device 3 which stores a feature value generated by the registered image feature value generating device 1 is installed in the memory device M1.

A collating device 4 which collates a feature value stored in the registered image feature value storage device 3 and a feature value generated by the retrieved image feature value generating device 2 is installed in the computer C2.

A feature vector accordance number storage device 5 which stores the number of times that a feature value (vector) generated in each registered document is matched to a feature vector generated in a retrieved image is installed in the memory device M2.

An identifying device 6 which determines a registered image to be retrieved based on a feature value accordance number of each registered image is installed in the computer C2.

The memory device M1 and the memory device M2 may be identical to each other, the computer C1 and the computer C2 may be identical to each other, and the scanner A and the scanner B may be also identical to each other.

Here, in the present example, N = 7, M = 6, and f= 4 are used as parameter values, and an affine invariant is used as an invariant.

Also, a maximum number of feature points to be integrated is 2. A distance between connected regions as a criterion for integrating feature points is a minimum value of a city block distance $d$ of an arbitrary image of a connected region $\alpha$ and an arbitrary image of a different connected region $\beta$ and is defined by Formula 2.

One pair of connected regions in which a value of Dist1 of Formula 2 is equal to or less than TH1 = 2 is integrated.

In detail, for example, a distance value between a pair of two connected regions $\alpha$ and $\beta$ is 2 as shown in FIG. 15. CC1 defined in Formula 2 is identical in meaning to $\alpha$ of a connected region, and CC2 is identical in meaning to $\beta$ of a connected region.

That is, in FIG. 15, portions marked by O means that connected regions $\alpha$ and $\beta$ contact each other when a distance value between a pair of connected regions $\alpha$ and $\beta$ by Formula 2 is 2 and a distance value of Formula 2 is 1.

A distance between feature points is defined by Euclidean distance. As a coordinate system of an image, a lower left portion is a starting point, a positive direction of an x coordinate is a right direction of an image, and a positive direction of a y coordinate is a top direction of an image.

In the first example, an example in which the scanner A picks up images of documents DObj1 and DObj2, and registered feature values are computed as images PR1A and PR2A, and then the scanner B picks up an image of a document DObj1, and it is retrieved (identifies) which one of the images PR1A and PR2A in which a feature value of an image PR1B is registered as an image PR1B is described.

First, an operation (FIG. 4) of the document image retrieving system Z illustrated in FIG. 14 in which, when a certain registered image PR1A is input from the scanner A, the registered image feature value generating device 1 generates a feature value and stores a feature value in the registered image feature value storage device 3 will be described.

The registered image PR1A is a 256 gray scale image and is illustrated in FIG. 16.

When the registered image PR1A is input to the registered image feature value generating device 1, the feature point extracting unit 11 performs feature point extraction processing (step S11 of FIG. 4). First, a binary image is generated by binary image generating processing of step S111 illustrated in FIG. 5.

Here, binarization is performed using a predetermined threshold value TH0.

Next, as connected region labeling processing (step S112 of FIG. 5) for the generated binary image, for example, labeling processing by 4-connection run analysis described in Non Patent Literature 3 is performed.

A connected region labeling image LI1 obtained through labeling processing is illustrated in FIG. 17. In FIG. 17, circumscribed rectangles of a label region are overlapped as a result of labeling processing.

Since there is a blur in an image of FIG. 16, a region which has to be one connected region is divided into two connected regions.

In further detail, it is expected in FIG. 17 that one connected region exists in each alphabet. However, since a character "G" of the registered image PR1A illustrated in FIG. 16 blurs (in this case, an image is dilutely taken), a connected region of "G" illustrated in FIG. 17 is divided into two.

Next, a centroid of a connected region is obtained by connected region centroid/pixel number computation processing (step S113 of FIG. 5) and used as a feature point.

Here, a feature point is stored as illustrated in FIG. 18 together with a pixel number of the connected region.

Next, a distance Dist1 between connected regions is obtained by inter-connnected region distance computation processing (step S1141 of FIG. 6) of integrating feature point computation processing (step S114 of FIG. 5). In the present example, since TH1 = 2, a distance is obtained by a method which can detect up to at least 2 as a distance value.

Here, a distance between connected regions is obtained by scanning an overall surface of a label image using, for example, a filter of FIG. 19 which can measure up to 3 as a distance value.

Here, a distance value 0 means that it is not an integration target.

A connection region which satisfies a condition is stored again in association with feature point information (FIG. 18) which is already stored as shown in FIG. 20.

Next, in integration processing (step S1142 of FIG. 6), a pair of connected regions in which, a distance between connected regions is equal to or less than TH1 = 2 are integrated using stored feature point information (FIG. 20) to thereby obtain an integrating feature point. {0293} In this case, a connected region pixel number is stored in advance through connected region centroid/pixel number computation processing (step S113 of FIG. 5), $(x_i, y_i)$ and $(x_j, y_j)$ are used as two feature point coordinates when obtaining a centroid of an integrating feature point in integration processing (step S1142 of FIG. 6), and $P_i$ and $P_j$ are used as connected component pixel number corresponding to feature points i and j. Coordinates $(x_\phi, y_\phi)$ of an integrating feature point can be easily obtained by Formula 3 from a character of a centroid:

$$\{\text{Formula 3}\}$$
$$(x_k, y_k) = \frac{p_i(x_i, y_i) + p_j(x_j, y_j)}{p_i + p_j} \ldots (3)$$

Of course, instead of feature point coordinates which are already obtained, an integrated region may be obtained from an connected region labeling image L11 (which is, even though not shown, an image computed through connected region labeling processing of FIG. 5), and a centroid of the integrated region may be used.

In the present example, an integrating feature point of a connected region obtained as a result of performing feature point extraction processing (step S11 of FIG. 11) is illustrated in FIG. 21.

In FIG. 21, a pair of regions (for example, nos. 4 and 5) which are divided into two due to a blur are connected, and an integrating feature point (for example, no. 14) is computed.

Nos. 9 and 13 are connected, so that an integrating feature point no. 15 is computed, and nos. 10 and 11 are connected, so that an integrating feature point no. 16 is computed.

Also, in this case, an image in which a connected region number is imparted to the registered image PR1A is illustrated in FIG. 22. As can be seen from FIGs. 21 and 22, connected region nos. 9 and 15 are very close to each other.

Next, the registered image feature value generating unit 12 performs registered image feature value extraction processing (step S12 of FIG. 4).

First, the principal feature point setting section 121 of the registered image feature value generating unit 12 sets one feature point as a principal feature point (step S1201).

In the present description, a connected region no. 7 illustrated in FIG. 22 is used as a principal feature point.

Next, it is determined whether or not the principal feature point is an integrating feature point (step S1202). In this case, as illustrated in FIG. 21, in the case of an integrating feature point, an integration flag "1" is written, and thus it can be determined whether or not the principal feature point is an integrating feature point using an integration flag. Also, in this case, a determination result is "No", and thus procedure proceeds to step S1203.

In step S1203, N (= 7) feature points, starting from one which is short in Euclidean distance from a principal feature point, are selected from among feature points excluding a principal feature point and an integrating feature point.

In the present example, 7 feature points of feature point nos. 8, 4, 5, 2, 10, 11, and 3 are selected. Next, in step S1204, one combination of M (= 6) points which are selected from among N (= 7) points is selected. Here, M (= 6) points of feature point nos. 8, 4, 5, 2, 10, and 11 are selected.

Here, feature point numbers are sorted in a direction that a half line which extends from no. 7 as an axis to pass through no. 8 moves clockwise, starting from a neighbor feature point no. 4 which is nearest to the principal feature point no. 7.

Next, in step S1204, an affine computation amount computed from coordinates of f (= 4) points is obtained.

Next, in step S1205, a feature vector is computed using an affine invariant.

Here, according to Non Patent Literature 2, an affine invariant refers to an amount, determined by Formula 4 with respect to two-dimensional position vectors $\gamma_1$, $\gamma_2$, $\gamma_3$, and $\gamma_4$.

$$\{\text{Formula 4}\}$$

$$\text{Affine invariant} = \frac{\begin{vmatrix} \gamma_3 - \gamma_1 & \gamma_4 - \gamma_1 \end{vmatrix}}{\begin{vmatrix} \gamma_2 - \gamma_1 & \gamma_3 - \gamma_1 \end{vmatrix}} \quad \dots (4)$$

Here, $|\gamma_i\ \gamma_j|$ is a determinant of a $2 \times 2$ matrix $|\gamma_i\ \gamma_j|$ which is generated by horizontally arranging two column vectors $\gamma_i$ and $\gamma_j$.

Processing of step S1204 and step S1205 is performed for all combinations of f points which are selected from among an ordered combination of M points.

In step S1206, it is determined whether or not computation of a feature vector for all combinations of M points which can be selected from among N points is completed.

Here, when computation of a feature vector even for one of M neighbor feature points is not completed yet, the procedure returns to step S1204, and so neighbor feature points of a feature vector which is not computed yet are selected, and then computation of a feature vector is performed.

Accordingly, feature vectors for all combinations of M points which can be selected from among N points are computed.

As a method for selecting $\gamma_1$, $\gamma_2$, $\gamma_3$, and $\gamma_4$ from among an ordered combination of M points, combinations illustrated in FIG. 23 are selected.

For example, in a first element illustrated in FIG. 23, with respect to feature points in an ordered combination of M points, $\gamma_1$ uses a first feature point coordinate of an ordered combination, $\gamma_2$ uses a second feature point coordinate, $\gamma_3$ uses a third feature point coordinate, and $\gamma_4$ uses a fourth feature point coordinate.

The number of combinations of f (= 4) points which are selected from among M (= 6) points is $_MC_f$ = 15, and thus a feature value vector generated in the present embodiment is a 15-dimentional vector.

Processing of step S1204 and step S1205 is repeated, so that a 15-dimentioanl feature value vector is generated with respect to a principal feature point no. 7 as illustrated in FIG. 24 and stored in the registered image feature value storage device 3.

Therefore, processing of from step S1204 to step S1206 in which the 15-dimentional feature value vector is generated is performed for all combinations of M (= 6) points which are selected from among N (= 7) points.

Since one feature value vector is generated with respect to one combination of M points, for example, $_NC_M$ =7 feature vectors are generated with respect to a principal feature point no. 8 through processing of from step S1204 to step S1206 and stored in the registered image feature value storage device 3 (see FIG. 24).

Next, in step S1207, it is determined whether or not all of feature point sets through which an integrating feature point is generated exist among neighbor feature points.

In this case, in a distance between connected region nos. 4 and 5 and a distance between nos. 10 and 11 among connected regions which are imparted corresponding to N points selected in step S1203, a distance between connected regions is $2 \leq \text{TH1}$, and so feature value addition computation processing (FIG. 8) of step S1208 is performed.

First, connected region nos. 4 and 5 are removed from a combination of N points, and an integrating feature point no. 14 (FIG. 22) generated by integrating nos. 4 and 5 is added (step S12081 of FIG. 8).

As a result, a combination of N'(= 6) feature points of feature point nos. 8, 14, 3, 2, 10, and 11 is obtained.

Next, determination of step S12082 of FIG. 8 is performed. In this case, since it is determined as "Yes", processing of step S12083 is performed. Also, in the present example, since it is always "Yes", processing of step S12082 may be skipped.

Next, in step S12083, an ordered combination of M (= 6) points which can be selected from among N' (=6) points is obtained.

As a result, an ordered combination of feature point nos. 8, 14, 3, 2, 10, and 11 is obtained. Next, a feature vector is obtained in step S12084.

This step is identical in an operation to step S1205.

Through computation described above, an 8th feature vector for a principal feature point no. 7 is generated and stored in the registered image feature value storage device 3. This is only one ordered combination of M (= 6) points which can be selected from among N'(= 6) points (step S12085), and since a process of generating a feature vector using an integrating feature point for connected region nos. 10 and 11 is not performed (step S12086), the procedure returns to step S12081, and then processing of computing a feature vector is performed.

Through computation described above, 9 kinds of 15-dimentional feature vectors are generated with respect to a principal Mature point no. 8.

Processing of from step S1201 to step S1209 is repeated until processing is performed by setting all of first to sixteenth feature points as a principal feature point.

Therefore, registered image feature value extraction processing (FIG. 4) for the registered image PR1A is completed. As a result, a feature value illustrated in FIG. 24 is computed.

Also, registered image feature value extraction processing (FIG. 4) for the registered image PR2A (FIG. 25) is completed. Accordingly, a feature value illustrated in FIG. 26 is computed.

Next, a case in which an image of the document DObj1 is taken by the scanner B, and the retrieved image PR1B is input to the retrieved image feature value computing device 2 after registered image feature value extraction processing (FIG. 4) for the registered images PR1A and PR2A will be described.

Here, since an image taken from the document DObj1 is PR1A among registered images, PR1A is preferably output as a retrieval (identification) result.

When the retrieved image PR1B illustrated in FIG. 27 is input to the retrieved image feature value computing device 2 (FIG. 14), a feature vector accordance number corresponding to each registered document which is stored in the feature vector accordance number storage device 5 (FIG. 14) is initialized to zero (0).

Next, feature point extraction processing (step S21) is performed through the feature point extracting unit 21 of the retrieved image feature value computing device 2. This processing is the same processing as feature point extraction processing (step S11) through the feature point extracting unit 11 of the registered image feature value computing device 1.

As a result, feature points illustrated in FIG. 28 are acquired. Of course, values of parameters such as a binarization threshold value and a threshold value Dist1 used for integration may be changed by the feature point extracting unit 11 of the register image feature value computing device 1 and the feature point extracting unit 21 of the retrieved image feature value computing device 2 so that an object difference of a scanner which is an input can be absorbed.

Next, retrieved image feature value computation processing (step S22) performed through the retrieved image feature value computing unit 22 will be described. Retrieved image feature value computation processing (step S22 of FIG. 9) is performed in cooperation with feature value collation processing performed through the feature value collating device 4 which is described later.

In detail, whenever one feature value (vector) is generated, collation processing for a feature value (vector) stored in the registered image feature value storage device 3 is performed, which will be described below in detail.

First, the principal feature point setting section 221 of the retrieved image feature value computing device 2 sets one feature point as a principal feature point (step S2201 of FIG. 10).

Here, a case in which a feature point no. 6 is set as a principal feature point after feature values (vectors) are generated by setting feature points nos. 1 to 5 as principal feature points will be described.

Next, in step S2202 of FIG. 10, it is determined whether or not the principal feature point is the integrating feature point. Since the feature point no. 6 is not the integrating feature point (FIG. 20), the procedure proceeds to step S2203.

In step S2203, N (= 7) feature points near to the principal feature point no. 6 are selected from among feature points excluding the integrating feature point and the principal feature point (which is the feature point no. 6 in this case). Here, 7 feature points no. 7, 4, 3, 2, 9, 10, and 8 are selected (FIG. 28).

Next, in step S2204, one combination of M (= 6) points which are selected from among N (= 7) points is selected. Here, as a first combination, feature points nos. 7, 4, 3, 2, 9, and 10 are selected. This combination is ordered similarly to an ordering method by processing of step S1204.

Next, in step S2205 (FIG. 10), a cyclic permutation of an ordered combination of M (= 6) points is computed.

First, an ordered combination of 7, 4, 3, 2, 9, and 10 which is not circulated is output. Next, a feature value (vector) for this ordered combination is computed in step S2206 (FIG. 10). The feature value generating method is identical to the feature value generating method of step S1205.

Since processing of step S2205 and step S2206 is performed for all of cyclic combinations, a feature value (vector) is computed even for a different ordered combination, for example, 4, 3, 2, 9, 10, and 7.

Also, as described above, processing of from step S2204 to step S2207 is repeated until computation for all of combinations of M (= 6) points which are selected from among N (= 7) points is completed.

In the present example, in step S2206 (FIG. 10), whenever one feature value (vector) is computed, collation processing which will be described later is performed through the feature value collating device 4 (FIG. 14).

As a result of collation processing, when there is a feature vector which is determined as matched, an accordance number for each registered document which is stored in the feature vector accordance number storage device 5 increases by one.

Next, collation processing will be described in detail with reference to a flowchart illustrated in FIG. 29.

First, in step S41 of FIG. 29, a distance between a certain feature vector stored in the registered image feature value storage device 3 and a feature vector generated from a retrieved image is computed (step S41), and it is determined as matched when it does not exceed a predetermined threshold value TH1 (step S42).

An existing criterion which can compute a distance between two vectors may be used as a distance criterion. In the present example, an error square sum of two vectors is used as a distance, and 0.15 is used as a value of TH1.

For example, a 0-th feature vector, which is not circulated, of an ordered combination for the principal feature point no. 6 of the retrieved image PR1b which is computed in step S2206 (FIG. 10) is illustrated in FIG. 30. An error square sum with a feature vector no. 8 for a principal feature point no. 7 computed from the registered image PR1A is 0.14.

In step S42, it is determined whether or not this value exceeds the threshold value TH1.

Here, when it does not exceed the threshold value TH1, the procedure proceeds to step S43, and two feature vectors are regarded as matched to each other, so that a feature vector accordance number corresponding to a registered image (which is PR1A in this example) in which the matched feature vector is computed increases by one (step S43).

In the case of this example, since an error square sum does not exceed a value of a predetermined threshold value TH1 = 0.15, the feature vector accordance number for the retrieved image PR1A increases by one.

When collation processing of the feature value collating device 4 is finished, the procedure proceeds to step S2207 (FIG. 10), and processing of the retrieved image feature value computing device 2 is subsequently performed.

In the present example, collation processing is performed whenever a feature value (vector) is generated from a registered image, but the present embodiment is not limited to it, and identification (retrieval) result which is identical in result may be obtained in such a way that all feature vectors are computed from a retrieved image in advance and stored in an appropriate storage device, and collation processing for all combination of feature vectors generated from a retrieved image and feature vectors generated from a registered image is performed.

The procedure returns to processing of the retrieved image feature value computing device 2, and then in step S2209 (FIG. 10), it is determined whether or not there is a pair of feature points which have to be integrated. In this case, a determination result is "No", and thus the procedure proceeds to step S2211.

In step S2211, it is determined whether or not processing for all of feature points is completed. Here, a determination result is "No", and thus processing is continued by setting a feature which is not set as a principal feature point yet as a principal feature point.

When processing in which all of feature points are set as a principal feature point is completed as described above, an accordance number, for example, an accordance number related to the registered image PR1A, which is stored in the feature vector accordance number storage device 5 (FIG. 14), becomes 6, while an accordance number related to the registered image PR2A becomes 1.

When the retrieved image feature value computing device 2 completes collation processing, the identifying device 6 (FIG. 14) determines a registered image which is largest in feature vector accordance number as an identical image with reference to an accordance number stored in the feature vector accordance number storage device 5 (FIG. 14).

In the present example, since a registered image which is largest in accordance number is used as a determination result, the registered image PR1A is output. Of course, even though an image itself is not output, an ID or a name which is specific to an image or a combination thereof may be output. Results corresponding to J candidates which are highest in feature vector accordance number as well as a single identical image may be output.

As described in the present example, an eighth feature vector for a principal feature point no. 7 computed from the retrieved image PR1A is a feature value (vector) which is generated by integrating feature points.

Since the feature value (vector) is a feature vector which cannot be generated by a conventional method, a feature value (vector) generated by integrating feature points according to the present example is effective in retrieving or identifying a document.

According to the present example, connected regions which are near to each other are integrated. Since separation or contact is regarded as a phenomenon occurring between connected regions which are near to each other, a method for integrating only connected regions which are near to each other can significantly reduce complexity required for integration, compared to a method for integrating all pairs of connected regions, and thus is effective.

In the present example, a distance Dist1 between connected regions is used to determine whether to integrate feature points.

Therefore, a contact of a connected component can be precisely simulated, and thus it is effective, compared to a case in which a distance between feature points is used as a criterion.

Also, in the cases of the first embodiment and the third embodiment of the present invention, this method is not easily affected by a gradient of a document between a registered image and a retrieved image and also does not require gradient correction of a registered image and a retrieved image and thus is effective.

The present application is based on Japanese Patent Application no. 2006-324095 (field on November 30, 2006) and claims priority under Pairs Convention from Japanese Patent Application no. 2006-324095, the disclosure of which is incorporated herein by reference in its entirety.

Although exemplary embodiments have been described, it should be understood that many changes, substitutions and alternatives can be made in the present invention without departing from the spirit or scope of the invention as defined in the claims. Even though claims are amended during prosecution, it is intended by the inventor that the equivalent scope of the claimed invention is maintained.

{Industrial Applicability}

The present, invention can be applied to a document retrieving device which retrieves a document image taken by an imaging device using an image picked up from a stored document. The present invention can be also applied to a device for retrieving or identifying an object using an identifier which is designed to identify a distinctive character string of an object surface, for example, an address region image of a mail, or an object independently. This retrieving or identifying device can be applied to a system which tracks an object using images taken from various portions.

**Claims**

1. A document image feature value generating device which extracts feature points from an input image which is input and generates a feature value from the feature points, comprising:

   integrating feature point extracting means for determining connected regions from the input image which is input, computing centroids of the connected regions and the feature points, integrating at least some of the connected regions, and obtaining an integrating feature point from a centroid of an integrated connected region; and
   feature value generating means for setting a principal feature point from among the feature points obtained and generating a feature value of the integrated connected region from neighbor feature points which are arranged near to the principal feature point and the integrating feature point.

2. The document image feature value generating device of claim 1,
   wherein the feature value generating means selects the neighbor feature points from among the feature points excluding the integrating feature point and the principal feature point to generate a feature value of the integrated connected region.

3. The document image feature value generating device of claim 1 or 2,
   wherein the feature value generating means prevents the integrating feature point and the feature point through which the integrating feature point is generated from being selected simultaneously to generate a feature of the integrated connected region.

4. The document image feature value generating device of any one of claims 1 to 3,
   wherein the feature value generating means prevents the feature point through which the principal feature point is generated from being selected as the neighbor feature point to generate a feature value of the integrated connected region.

5. The document image feature value generating device of any one of claims 1 to 4,
   wherein the integrating feature point computing means integrates connected components which are at a distance which does not exceed a predetermined set value from each other when integrating the connected regions.

6. The document image feature value generating device of claim 5,
   wherein the integrating feature point computing means uses a minimum value of a distance between a pixel belonging to one connected region of at least two connected regions and a pixel belonging to another connected region for computation of the integrating feature point.

7. The document image feature value generating device of claim 5 or 6,
   wherein the integrating feature point computing means obtains a distance of up to at least the predetermined set value when computing a distance of the connected region.

8. A document, image retrieval collating device, comprising:

    means for retrieving or identifying a document image using the feature value generated by using the document image feature value generating device of any one of claims 1 to 7.

9. A document image retrieval feature value storage device, comprising: a means for storing the feature value generated by using the document image feature value generating device of any one of claims 1 to 7.

10. A document image feature value generating method of a document image feature value generating device which extracts feature points from an input image which is input and generates a feature value from the feature points, the method comprising:

    an integrating feature point extracting step of determining connected regions from the input image which is input, computing centroids of the connected regions and the feature points, integrating at least some of the connected regions, and obtaining an integrating feature point from a centroid of an integrated connected region; and
    a feature value generating step of setting a principal feature point from among the feature points obtained and generating a feature value of the integrated connected region from neighbor feature points which are arranged near to the principal feature point and the integrating feature point.

11. The document image feature value generating method of claim 10,
    wherein in the feature value generating step, the neighbor feature points are selected from among the feature points excluding the integrating feature point and the principal feature point to generate a feature value of the integrated connected region.

12. The document image feature value generating method of claim 10 or 11,
    wherein in the feature value generating step, the integrating feature point and the feature point through which the integrating feature point is generated are prevented from being selected simultaneously to generate a feature value of the integrated connected region.

13. The document image feature value generating method of any one of claims 10 to 12,
    wherein in the feature value generating step, the feature point through which the principal feature point is generated is prevented from being selected as the neighbor feature point to generate a feature value of the integrated connected region.

14. The document image feature value generating method of any one of claims 10 to 13,
    wherein in the integrating feature point computing step, connected components which are at a distance which does not exceed a predetermined set value from each other are integrated when integrating the connected regions.

15. The document image feature value generating method of claim 14,
    wherein in the integrating feature point computing step, a minimum value of a distance between a pixel belonging to one connected region of at least two connected regions and a pixel belonging to another connected region is used for computation of the integrating feature point.

16. The document image feature value generating method of claim 14 or 15,
    wherein in the integrating feature point computing step, a distance of up to at least the predetermined set value is obtained when computing a distance of the connected region.

17. A document image retrieval collating method, comprising

    a step of retrieving or identifying a document image using the feature value generated by using the document image feature value generating method of any one of claims 10 to 16.

18. A document image retrieval feature value storage method, comprising:

    a step of storing the feature value generated by using the document image feature value generating method of any one of claims 10 to 16.

**19.** A document image feature value generating program of a document image feature value generating device which extracts feature points from an input image which is input and generates a feature value from the feature points, for causing a computer to perform:

an integrating feature point extracting sequence of determining connected regions from the input image which is input, computing centroids of the connected regions and the feature points, integrating at least some of the connected regions, and obtaining an integrating feature point from a centroid of an integrated connected region; and

a feature value generating sequence of setting a principal feature point from among the feature points obtained and generating a feature value of the integrated connected region from neighbor feature points which are arranged near to the principal feature point and the integrating feature point.

**20.** The document image feature value generating program of claim 19,
wherein in the feature value generating sequence, the neighbor feature points are selected from among the feature points excluding the integrating feature point and the principal feature point to generate a feature value of the integrated connected region in a computer.

**21.** The document image feature value generating program of claim 19 or 20,
wherein in the feature value generating sequence, the integrating feature point and the feature point through which the integrating feature point is generated are prevented from being selected simultaneously to generate a feature value of the integrated connected region in a computer.

**22.** The document image feature value generating program of any one of claims 19 to 21,
wherein in the feature value generating sequence, the feature point through which the principal feature point is generated is prevented from being selected as the neighbor feature point to generate a feature value of the integrated connected region in a computer.

**23.** The document image feature value generating program of any one of claims 19 to 22,
wherein in the integrating feature point computing sequence, connected components which are at a distance which does not exceed a predetermined set value from each other are integrated in a computer when integrating the connected regions.

**24.** The document image feature value generating program of claim 23, wherein in the integrating feature point computing sequence, a minimum value of a distance between a pixel belonging to one connected region of at least two connected regions and a pixel belonging to another connected region is used for computation of the integrating feature point in a computer.

**25.** The document image feature value generating program of claim 23 or 24, wherein in the integrating feature point computing sequence, a distance of up to at least the predetermined set value is obtained in a computer when computing a distance of the connected region.

**26.** A document, image retrieval collating program, for causing a computer to perform:

a sequence of retrieving or identifying a document image using the feature value generated by using the document image feature value generating program of any one of claims 19 to 25.

**27.** A document image retrieval feature value storage program, for causing a computer to perform:

a sequence of storing the feature value generated by using the document image feature value generating program of any one of claims 19 to 25.

**Amended claims under Art. 19.1 PCT**

**1.** Amended) A document image feature value generating device which extracts feature points from an input image and generates a feature value which is a geometric invariant from the feature points, comprising:

integrating feature point extracting means for determining connected regions included in the input image, computing a centroid of the connected regions as a first feature point, and computing a centroid of an integrated connected region in which at least some of the connected regions are integrated as a second feature point; and feature value generating means for setting one of the obtained first feature point and the second feature point as a principal feature point and generates the feature value based on neighbor feature points which are arranged near to the principal feature point.

2. Amended) The document image feature value generating device of claim 1,
wherein the feature value generating means selects the neighbor feature points including the second feature point from among the first and second feature points excluding the principal feature point when generating the feature value.

3. Amended) The document image feature value generating device of claim 1 or 2,
wherein the feature value generating means prevents the integrating feature point and the first feature point through which the integrating feature point is generated from being selected simultaneously to generate the feature.

4. Amended) The document image feature value generating device of any one of claims 1 to 3,
wherein the feature value generating means prevents the first feature point through which the principal feature point is generated from being selected as the neighbor feature point to generate the feature value when the principal feature point is the integrating feature point.

5. Amended) The document image feature value generating device of any one of claims 1 to 4,
wherein the integrating feature point computing means integrates connected components which are at a distance which does not exceed a predetermined set value from each other when integrating the connected regions.

6. Amended) The document image feature value generating device of claim 5,
wherein the integrating feature point computing means uses a minimum value of a distance between a pixel belonging to one connected region of at least two connected regions and a pixel belonging to another connected region for computation of the integrating feature point.

7. Amended) The document image feature value generating device of claim 5 or 6,
wherein the integrating feature point computing means obtains a distance of up to at least the predetermined set value when computing a distance of the connected region.

8. A document image retrieval collating device, comprising:

   means for retrieving or identifying a document image using the feature value generated by using the document image feature value generating device of any one of claims 1 to 7.

9. A document image retrieval feature value storage device, comprising: a means for storing the feature value generated by using the document image feature value generating device of any one of claims 1 to 7.

10. Amended) A document image feature value generating method of a document image feature value generating device which extracts feature points from an input image and generates a feature value which is a geometric invariant from the feature points, the method comprising:

   a feature point extracting step of determining connected regions included in the input image, computing a centroid of the connected regions as a first feature point, and computing a centroid integrated feature point of a region in which at least some of the connected regions are integrated as a second feature point; and
   a feature value generating step of setting one of the obtained first feature point and second feature point as a principal feature point and generating the feature value based on neighbor feature points which are arranged near to the principal feature point.

11. Amended) The document image feature value generating method of claim 10, wherein in the feature value generating step, the neighbor feature points including the second feature point are selected from among the first and second feature points excluding the principal feature point when generating the feature value.

12. Amended) The document image feature value generating method of claim 10 or 11, wherein in the feature value generating step, the integrating feature point and the first feature point through which the integrating feature point is generated are prevented from being selected simultaneously to generate the feature value.

**13.** Amended) The document image feature value generating method of any one of claims 10 to 12, wherein in the feature value generating step, the first feature point through which the principal feature point is generated is prevented from being selected as the neighbor feature point to generate the feature value of when the principal feature point is the integrating feature point.

**14.** Amended) The document image feature value generating method of any one of claims 10 to 13, wherein in the integrating feature point computing step, connected components which are at a distance which does not exceed a predetermined set value from each other are integrated when integrating the connected regions.

**15.** Amended) The document image feature value generating method of claim 14, wherein in the integrating feature point computing step, a minimum value of a distance between a pixel belonging to one connected region of at least two connected regions and a pixel belonging to another connected region is used for computation of the integrating feature point.

**16.** Amended) The document image feature value generating method of claim 14 or 15, wherein in the integrating feature point computing step, a distance of up to at least the predetermined set value is obtained when computing a distance of the connected region.

**17.** A document image retrieval collating method, comprising:

a step of retrieving or identifying a document image using the feature value generated by using the document image feature value generating method of any one of claims 10 to 16.

**18.** A document image retrieval feature value storage method, comprising:

a step of storing the feature value generated by using the document image feature value generating method of any one of claims 10 to 16.

**19.** Amended) A document image feature value generating program of a document image feature value generating device which extracts feature points from an input image and generates a feature value which is a geometric invariant from the feature points, for causing a computer to perform:

a feature point extracting sequence of determining connected regions included in the input image, computing a centroid of the connected regions as a first feature point, and computing a centroid integrated feature point of a region in which at least some of the connected regions are integrated as a second feature point; and
a feature value generating sequence of setting one of the obtained first feature point and second feature point as a principal feature point and generating the feature value based on neighbor feature points which are arranged near to the principal feature point.

**20.** Amended) The document image feature value generating program of claim 19, wherein in the feature value generating sequence, the neighbor feature points including the second feature point are selected from among the first and second feature points excluding the principal feature point when generating the feature value in a computer.

**21.** Amended) The document image feature value generating program of claim 19 or 20, wherein in the feature value generating sequence, the integrating feature point and the first feature point through which the integrating feature point is generated are prevented from being selected simultaneously to generate the feature value in a computer.

**22.** Amended) The document image feature value generating program of any one of claims 19 to 21, wherein in the feature value generating sequence, the first feature point through which the principal feature point is generated is prevented from being selected as the neighbor feature point to generate feature in a computer when the principal feature point is the integrating feature point.

**23.** Amended) The document image feature value generating program of any one of claims 19 to 22, wherein in the integrating feature point computing sequence, connected components which are at a distance which does not exceed a predetermined set value from each other are integrated in a computer when integrating the connected regions.

**24.** Amended) The document image feature value generating program of claim 23, wherein in the integrating feature point computing sequence, a minimum value of a distance between a pixel belonging to one connected region of at least two connected regions and a pixel belonging to another connected region is used for computation of the integrating feature point in a computer.

**25.** Amended) The document image feature value generating program of claim 23 or 24, wherein in the integrating feature point computing sequence, a distance of up to at least the predetermined set value is obtained in a computer when computing a distance of the connected region.

**26.** A document image retrieval collating program, for causing a computer to perform:

a sequence of retrieving or identifying a document image using the feature value generated by using the document image feature value generating program of any one of claims 19 to 25.

**27.** A document image retrieval feature value storage program, for causing a computer to perform:

a sequence of storing the feature value generated by using the document image feature value generating program of any one of claims 19 to 25.

# FIG.1

DOCUMENT IMAGE RETRIEVAL FEATURE
VALUE GENERATING SYSTEM D

REGISTERED IMAGE
FEATURE VALUE
COMPUTING DEVICE ～1

RETRIEVED IMAGE
FEATURE VALUE
COMPUTING DEVICE ～2

REGISTERED IMAGE
FEATURE VALUE
STORAGE DEVICE ～3

# FIG.2

FEATURE POINT
EXTRACTING UNIT 11

REGISTERED IMAGE
FEATURE VALUE
COMPUTING UNIT 12

BINARY IMAGE
GENERATING SECTION ~111

CONNECTED REGION
COMPUTING SECTION ~112

CONNECTED REGION
CENTROID
COMPUTING SECTION ~113

INTEGRATING FEATURE
POINT
COMPUTING SECTION ~114

PRINCIPAL FEATURE
POINT SETTING SECTION ~121

NEIGHBOR FEATURE POINT
COMPUTING SECTION ~122

NEIGHBOR FEATURE POINT
SELECTING SECTION ~123

INVARIANT COMPUTING
SECTION ~124

REGISTERED IMAGE
FEATURE VALUE
STORAGE DEVICE ~3

EP 2 093 709 A1

# FIG.3

RETRIEVED IMAGE FEATURE
VALUE COMPUTING DEVICE 2

FEATURE POINT
EXTRACTING UNIT 21

RETRIEVED IMAGE
FEATURE VALUE
COMPUTING UNIT 22

BINARY IMAGE
GENERATING SECTION — 211

CONNECTED REGION
COMPUTING SECTION — 212

CONNECTED REGION
CENTROID
COMPUTING SECTION — 213

INTEGRATING FEATURE
POINT
COMPUTING SECTION — 214

PRINCIPAL FEATURE
POINT SETTING SECTION — 221

NEIGHBOR FEATURE POINT
COMPUTING SECTION — 222

NEIGHBOR FEATURE POINT
SELECTING SECTION — 223

CYCLIC COMPUTING
SECTION — 224

INVARIANT COMPUTING
SECTION — 225

# FIG.4

START

↓

FEATURE POINT EXTRACTION
PROCESSING

S11

↓

REGISTERED IMAGE FEATURE
VALUE EXTRACTION
PROCESSING

S12

↓

END

# FIG.5

START —S11

↓

S111

BINARY IMAGE GENERATION PROCESSING

↓

S112

CONNECTED REGION LABELING PROCESSING

↓

S113

CONNECTED REGION CENTROID/PIXEL NUMBER COMPUTATION PROCESSING

↓

S114

INTEGRATING FEATURE POINT COMPUTATION PROCESSING

↓

END

# FIG.6

START —S114

↓

S1141

INTER-CONNECTED REGION DISTANCE COMPUTATION PROCESSING

↓

S1142

INTEGRATION PROCESSING

↓

END

# FIG.7

START

SET CERTAIN FEATURE POINT AS PRINCIPAL FEATURE POINT ⟶S1201

IS PRINCIPAL FEATURE POINT INTEGRATING FEATURE POINT? ⟶S1202

YES ⟶ SELECT NEIGHBOR FEATURE POINTS (N POINTS) EXCLUDING FEATURE POINT THROUGH WHICH PRINCIPAL FEATURE POINT IS GENERATED ⟶S1210

NO

SELECT NEIGHBOR FEATURE POINTS (N POINTS) ⟶S1203

SELECT ONE COMBINATION OF M POINTS WHICH ARE SELECTED FROM AMONG N POINTS ⟶S1204

SELECT ONE COMBINATION OF M POINTS WHICH ARE SELECTED FROM AMONG N POINTS ⟶S1211

COMPUTE FEATURE VECTOR FROM COMBINATION OF M POINTS AND STORE FEATURE VECTOR ⟶S1205

COMPUTE FEATURE VECTOR FROM COMBINATION OF M POINTS AND STORE FEATURE VECTOR ⟶S1212

NO ⟵ IS FEATURE VECTOR FOR ALL OF COMBINATIONS OF M POINTS WHICH CAN BE SELECTED FROM AMONG N POINTS COMPUTED? ⟶S1206

NO ⟵ ARE FEATURE VECTORS FOR ALL OF COMBINATIONS OF M POINTS WHICH CAN BE SELECTED FROM AMONG N POINTS COMPUTED? ⟶S1213

YES

DOES FEATURE POINT SET THROUGH WHICH INTEGRATING FEATURE POINT IS GENERATED EXIST AMONG NEIGHBOR FEATURE POINTS? ⟶S1207

NO

YES

DOES FEATURE POINT SET THROUGH WHICH INTEGRATING FEATURE POINT IS GENERATED EXIST AMONG NEIGHBOR FEATURE POINTS? ⟶S1214

NO

YES

FEATURE VALUE ADDITION COMPUTATION PROCESSING ⟶S1208

FEATURE VALUE ADDITION COMPUTATION PROCESSING ⟶S1215

NO ⟵ IS COMPUTATION FOR ALL FEATURE POINTS COMPLETED? ⟶S1209

YES

END

# FIG.8

```
        ( START )──S1208
            │
            ↓
```

S12081

DELETE INTEGRATED FEATURE POINTS
THROUGH WHICH CERTAIN INTEGRATING FEATURE
POINT IS GENERATED FROM N NEIGHBOR FEATURE
POINTS AND INSTEAD ADD INTEGRATING FEATURE
POINT COMPUTED FROM INTEGRATED FEATURE POINTS

S12082

NO ◄── $N' \geqq M$?

│ YES

S12083

SELECT ONE COMBINATION OF M POINTS WHICH
ARE SELECTED FROM AMONG N' FEATURE POINTS

S12084

COMPUTE FEATURE VECTOR FROM M FEATURE
POINTS AND STORE FEATURE VECTOR

S12085

NO ◄── ARE FEATURE
VECTORS FOR ALL OF
COMBINATIONS OF M POINTS WHICH CAN BE
SELECTED FROM AMONG N'
POINTS COMPUTED?

│ YES

S12086

NO ◄── IS COMPUTATION
OF FEATURE VECTOR FOR
ALL OF INTEGRATED FEATURE
POINT SETS WHICH ARE INCLUDED AMONG
NEIGHBOR FEATURE POINTS AND
THROUGH WHICH CERTAIN
INTEGRATING FEATURE
POINT IS GENERATED
COMPLETED?

│ YES

( END )

34

# FIG.9

```
        ┌──────────┐
        │  START   │
        └────┬─────┘
             │                          ⌒S21
        ┌────▼─────────────────────────────┐
        │   FEATURE POINT EXTRACTION        │
        │         PROCESSING                │
        └────┬─────────────────────────────┘
             │                          ⌒S22
        ┌────▼─────────────────────────────┐
        │  RETRIEVED IMAGE FEATURE VALUE    │
        │     EXTRACTION PROCESSING         │
        └────┬─────────────────────────────┘
             │
        ┌────▼─────┐
        │   END    │
        └──────────┘
```

## FIG.10

```
                    ( START )
                         │
                         ▼                                    S2201
┌─────────────────────────────────────────────────────┐
│   SET CERTAIN FEATURE POINT AS PRINCIPAL             │
│              FEATURE POINT                           │
└─────────────────────────────────────────────────────┘
                         │                               S2202
                         ▼
      ╱─────────────────────────────────────╲  YES
     ╱  IS PRINCIPAL FEATURE POINT INTEGRATING ╲──────────────────────────────┐
     ╲         FEATURE POINT?                  ╱                              │
      ╲─────────────────────────────────────╱                                │
                    │ NO          S2203                                       │
                    ▼                                                         ▼          S2212
┌──────────────────────────────────────┐         ┌─────────────────────────────────────────────┐
│ SELECT NEIGHBOR FEATURE POINTS        │         │  SELECT NEIGHBOR FEATURE POINTS (N POINTS)    │
│          (N POINTS)                   │         │  EXCLUDING FEATURE POINT THROUGH WHICH        │
└──────────────────────────────────────┘         │   PRINCIPAL FEATURE POINT IS GENERATED        │
                    │         S2204               └─────────────────────────────────────────────┘
                    ▼                                                │              S2213
┌──────────────────────────────────────┐                           ▼
│ SELECT ONE COMBINATION OF M POINTS    │         ┌─────────────────────────────────────────────┐
│  WHICH ARE SELECTED FROM AMONG N      │         │  SELECT ONE COMBINATION OF M POINTS WHICH     │
│              POINTS                   │         │   ARE SELECTED FROM AMONG N POINTS            │
└──────────────────────────────────────┘         └─────────────────────────────────────────────┘
                    │         S2205                               │           S2214
                    ▼                                             ▼
┌──────────────────────────────────────┐         ┌─────────────────────────────────────────────┐
│  COMPUTE CYCLIC PERMUTATION FOR       │         │   COMPUTE CYCLIC PERMUTATION FOR              │
│    COMBINATION OF M POINTS            │         │     COMBINATION OF M POINTS                   │
└──────────────────────────────────────┘         └─────────────────────────────────────────────┘
                    │         S2206                               │           S2215
                    ▼                                             ▼
┌──────────────────────────────────────┐         ┌─────────────────────────────────────────────┐
│ COMPUTE FEATURE VECTOR FROM COMBINATION│        │  COMPUTE FEATURE VECTOR FROM COMBINATION      │
│  OF M POINTS WHICH ARE CIRCULATED     │         │   OF M POINTS WHICH ARE CIRCULATED            │
└──────────────────────────────────────┘         └─────────────────────────────────────────────┘
                    │         S2207                               │           S2216
          NO        ▼                                    NO        ▼
    ╱─────────────────────────────╲               ╱─────────────────────────────────╲
   ╱ IS COMPUTATION OF FEATURE      ╲             ╱  IS COMPUTATION OF FEATURE VECTOR   ╲
   ╲ VECTOR FOR ALL OF CYCLIC       ╱             ╲  FOR ALL OF CYCLIC ARRANGEMENTS OF M╱
    ╲ ARRANGEMENTS OF M POINTS     ╱               ╲     POINTS COMPLETED?             ╱
     ╲  COMPLETED?                ╱                 ╲─────────────────────────────────╱
      ╲───────────────────────╱                              │ YES        S2217
              │ YES    S2208                        NO        ▼
    NO        ▼                                 ╱─────────────────────────────────╲
 ╱──────────────────────────────╲             ╱ IS FEATURE VECTOR FOR ALL OF        ╲
╱ IS FEATURE VECTOR FOR ALL OF    ╲           ╲ COMBINATIONS OF M POINTS WHICH CAN  ╱
╲ COMBINATIONS OF M POINTS WHICH  ╱           ╲ BE SELECTED FROM AMONG N POINTS     ╱
 ╲ CAN BE SELECTED FROM AMONG N   ╱            ╲       COMPUTED?                   ╱
  ╲  POINTS COMPUTED?            ╱              ╲─────────────────────────────────╱
   ╲─────────────────────────╱                         │ YES         S2218
           │ YES    S2209                               ▼
 ╱──────────────────────────────╲  NO        ╱─────────────────────────────────╲  NO
╱ DOES FEATURE POINT SET THROUGH  ╲──┐       ╱ DOES FEATURE POINT SET THROUGH    ╲──┐
╲ WHICH INTEGRATING FEATURE POINT ╱  │       ╲ WHICH INTEGRATING FEATURE POINT   ╱  │
 ╲ IS GENERATED EXIST AMONG       ╱  │        ╲ IS GENERATED EXIST AMONG         ╱  │
  ╲ NEIGHBOR FEATURE POINTS?     ╱   │         ╲ NEIGHBOR FEATURE POINTS?        ╱  │
   ╲─────────────────────────╱     │          ╲─────────────────────────────╱     │
           │ YES    S2210          │                  │ YES        S2219          │
           ▼                       │                  ▼                           │
┌──────────────────────────────┐   │       ┌─────────────────────────────────┐    │
│ FEATURE VALUE ADDITION        │   │       │  FEATURE VALUE ADDITION          │    │
│ COMPUTATION PROCESSING        │   │       │  COMPUTATION PROCESSING          │    │
└──────────────────────────────┘   │       └─────────────────────────────────┘    │
           │                       │                  │                           │
           ▼◄──────────────────────┘◄─────────────────┴───────────────────────────┘
 NO  ╱───────────────────────────╲   S2211
◄───╱ IS COMPUTATION FOR ALL       ╲
    ╲ FEATURE POINTS COMPLETED?    ╱
     ╲─────────────────────────╱
           │ YES
           ▼
       ( END )
```

# FIG.11

START —S2208

DELETE INTEGRATED FEATURE POINTS THROUGH
WHICH CERTAIN FEATURE POINT IS GENERATED
FROM N NEIGHBOR FEATURE POINTS AND INSTEAD
ADD INTEGRATING FEATURE POINT COMPUTED
FROM INTEGRATED FEATURE POINTS —S22081

S22082

NO ◇ N' ≧ M? ◇

YES

SELECT ONE COMBINATION OF M POINTS WHICH
ARE SELECTED FROM AMONG N' FEATURE POINTS —S22083

OBTAIN CYCLIC PERMUTATION FOR
COMBINATION OF M POINTS —S22084

COMPUTE FEATURE VECTOR FROM M
FEATURE POINTS —S22085

S22086

NO ◇ IS FEATURE
VECTOR FOR ALL OF CYCLIC PERMUTATIONS
COMPUTED? ◇

YES

S22087

NO ◇ IS FEATURE
VECTOR FOR ALL OF
COMBINATIONS OF M POINTS
WHICH CAN BE SELECTED FROM
AMONG N' POINTS
COMPUTED? ◇

YES

IS COMPUTATION
OF FEATURE VECTOR
FOR ALL OF INTEGRATED
NO ◇ FEATURE POINT SETS WHICH ARE INCLUDED
AMONG NEIGHBOR FEATURE POINTS AND
THROUGH WHICH CERTAIN INTEGRATING
FEATURE POINT IS GENERATED
COMPLETED? ◇ —S22088

YES

END

# FIG.12

REGISTERED IMAGE FEATURE
VALUE COMPUTING DEVICE 2

FEATURE POINT
EXTRACTING UNIT 21

RETRIEVED IMAGE
FEATURE VALUE
COMPUTING UNIT 22

BINARY IMAGE
GENERATING SECTION — 211

PRINCIPAL FEATURE POINT
SETTING SECTION — 221

CONNECTED REGION
COMPUTING SECTION — 212

NEIGHBOR FEATURE POINT
COMPUTING SECTION — 222

CONNECTED REGION
CENTROID
COMPUTING SECTION — 213

NEIGHBOR FEATURE POINT
SELECTING SECTION — 223

INTEGRATING FEATURE
POINT
COMPUTING SECTION — 214

INVARIANT COMPUTING
SECTION — 225

# FIG.13

FEATURE POINT EXTRACTING UNIT 11

| |
|---|
| BINARY IMAGE GENERATING SECTION ~111 |
| CONNECTED REGION COMPUTING SECTION ~112 |
| CONNECTED REGION CENTROID COMPUTING SECTION ~113 |
| INTEGRATING FEATURE POINT COMPUTING SECTION ~114 |

REGISTERED IMAGE FEATURE VALUE COMPUTING UNIT 12

| |
|---|
| PRINCIPAL FEATURE POINT SETTING SECTION ~121 |
| NEIGHBOR FEATURE POINT COMPUTING SECTION ~122 |
| NEIGHBOR FEATURE POINT SELECTING SECTION ~123 |
| CYCLIC COMPUTING SECTION ~125 |
| INVARIANT COMPUTING SECTION ~124 |

REGISTERED IMAGE FEATURE VALUE STORAGE DEVICE ~3

# FIG.14

SCANNER A

SCANNER B

COMPUTER C1

DOCUMENT IMAGE RETRIEVAL FEATURE
VALUE GENERATING SYSTEM D

COMPUTER C2

REGISTERED IMAGE
FEATURE VALUE
COMPUTING DEVICE — 1

RETRIEVED IMAGE
FEATURE VALUE
COMPUTING DEVICE — 2

REGISTERED IMAGE
FEATURE VALUE
STORAGE DEVICE — 3

MEMORY DEVICE M1

MEMORY DEVICE M2

FEATURE VALUE
COLLATING DEVICE — 4

5 — FEATURE VECTOR
ACCORDANCE NUMBER
STORAGE DEVICE

IDENTIFYING DEVICE — 6

## FIG.15

CONNECTED
REGION β

CONNECTED
REGION α

DIST 1

## FIG.16

ABCD

EFGH

NEC

## FIG.17

# FIG.18

CASE OF INTEGRATING
FEATURE POINT = 1

CENTROID POSITION
(NUMBERS ARE ROUNDED OFF TO
TWO DECIMAL PLACES)

DISTANCE BETWEEN CONNECTED REGIONS

| CONNECTED REGION (FEATURE POINT) NO. | CENTROID X AXIS | CENTROID Y AXIS | CONNECTED REGION PIXEL NUMBER | INTEG- RATION FLAG | TARGET REGION 1 | DIS- TANCE 1 | TARGET REGION 2 | DIS- TANCE 2 | ... | ... |
|---|---|---|---|---|---|---|---|---|---|---|
| 1 | 73.6 | 21.2 | 134 | 0 | — | — | — | — | — | — |
| 2 | 24.8 | 21.9 | 196 | 0 | — | — | — | — | — | — |
| 3 | 51.1 | 21.5 | 175 | 0 | — | — | — | — | — | — |
| 4 | 67.1 | 72.7 | 117 | 0 | — | — | — | — | — | — |
| 5 | 78.0 | 66.0 | 42 | 0 | — | — | — | — | — | — |
| 6 | 98.0 | 71.2 | 222 | 0 | — | — | — | — | — | — |
| 7 | 23.3 | 71.4 | 177 | 0 | — | — | — | — | — | — |
| 8 | 46.4 | 73.3 | 143 | 0 | — | — | — | — | — | — |
| 9 | 70.7 | 122.6 | 128 | 0 | — | — | — | — | — | — |
| 10 | 24.4 | 119.2 | 141 | 0 | — | — | — | — | — | — |
| 11 | 49.2 | 121.5 | 191 | 0 | — | — | — | — | — | — |
| 12 | 97.0 | 121.5 | 176 | 0 | — | — | — | — | — | — |
| 13 | 81.3 | 114.3 | 8 | 0 | — | — | — | — | — | — |
| | | | | | | | | | | |
| | | | | | | | | | | |
| | | | | | | | | | | |
| | | | | | | | | | | |

EP 2 093 709 A1

# FIG.19

| 0 | 0 | 0 | 3 | 0 | 0 | 0 |
|---|---|---|---|---|---|---|
| 0 | 0 | 3 | 2 | 3 | 0 | 0 |
| 0 | 3 | 2 | 1 | 2 | 3 | 0 |
| 3 | 2 | 1 | 0 | 1 | 2 | 3 |
| 0 | 3 | 2 | 1 | 2 | 3 | 0 |
| 0 | 0 | 3 | 2 | 3 | 0 | 0 |
| 0 | 0 | 0 | 3 | 0 | 0 | 0 |

# FIG.20

CASE OF INTEGRATING FEATURE POINT = 1

DISTANCE BETWEEN CONNECTED REGIONS

| CONNECTED REGION (FEATURE POINT) NO. | CENTROID X AXIS | CENTROID Y AXIS | CONNECTED REGION PIXEL NUMBER | INTEG- RATION FLAG | TARGET REGION 1 | DIS- TANCE 1 | TARGET REGION 2 | DIS- TANCE 2 | ... | ... |
|---|---|---|---|---|---|---|---|---|---|---|
| 1 | 73.6 | 21.2 | 134 | 0 | — | — | — | — | — | — |
| 2 | 24.8 | 21.9 | 196 | 0 | — | — | — | — | — | — |
| 3 | 51.1 | 21.5 | 175 | 0 | — | — | — | — | — | — |
| 4 | 67.1 | 72.7 | 117 | 0 | 4 | 2 | — | — | — | — |
| 5 | 78.0 | 66.0 | 42 | 0 | 5 | 2 | — | — | — | — |
| 6 | 98.0 | 71.2 | 222 | 0 | — | — | — | — | — | — |
| 7 | 23.3 | 71.4 | 177 | 0 | — | — | — | — | — | — |
| 8 | 46.4 | 73.3 | 143 | 0 | — | — | — | — | — | — |
| 9 | 70.7 | 122.6 | 128 | 0 | 13 | 2 | — | — | — | — |
| 10 | 24.4 | 119.2 | 141 | 0 | 11 | 2 | — | — | — | — |
| 11 | 49.2 | 121.5 | 191 | 0 | 10 | 2 | — | — | — | — |
| 12 | 97.0 | 121.5 | 176 | 0 | — | — | — | — | — | — |
| 13 | 81.3 | 114.3 | 8 | 0 | 9 | 2 | — | — | — | — |
|  |  |  |  |  |  |  |  |  |  |  |
|  |  |  |  |  |  |  |  |  |  |  |
|  |  |  |  |  |  |  |  |  |  |  |
|  |  |  |  |  |  |  |  |  |  |  |

EP 2 093 709 A1

# FIG.21

CASE OF INTEGRATING FEATURE POINT = 1

| CONNECTED REGION (FEATURE POINT) NO. | CENTROID X AXIS | CENTROID Y AXIS | CONNECTED REGION PIXEL NUMBER | INTEG-RATION FLAG | TARGET REGION 1 | DIS-TANCE 1 | TARGET REGION 2 | DIS-TANCE 2 | ... | ... |
|---|---|---|---|---|---|---|---|---|---|---|
| 1 | 73.6 | 21.2 | 134 | 0 | — | — | — | — | — | — |
| 2 | 24.8 | 21.9 | 196 | 0 | — | — | — | — | — | — |
| 3 | 51.1 | 21.5 | 175 | 0 | — | — | — | — | — | — |
| 4 | 67.1 | 72.7 | 117 | 0 | 5 | 2 | — | — | — | — |
| 5 | 78.0 | 66.0 | 42 | 0 | 4 | 2 | — | — | — | — |
| 6 | 98.0 | 71.2 | 222 | 0 | — | — | — | — | — | — |
| 7 | 23.3 | 71.4 | 177 | 0 | — | — | — | — | — | — |
| 8 | 46.4 | 73.3 | 143 | 0 | — | — | — | — | — | — |
| 9 | 70.7 | 122.6 | 128 | 0 | 13 | 2 | — | — | — | — |
| 10 | 24.4 | 119.2 | 141 | 0 | 11 | 2 | — | — | — | — |
| 11 | 49.2 | 121.5 | 191 | 0 | 10 | 2 | — | — | — | — |
| 12 | 97.0 | 121.5 | 176 | 0 | — | — | — | — | — | — |
| 13 | 81.3 | 114.3 | 8 | 0 | 9 | 2 | — | — | — | — |
| 14 | 70.0 | 70.9 | 159 | 1 | — | — | — | — | — | — |
| 15 | 71.3 | 122.1 | 136 | 1 | — | — | — | — | — | — |
| 16 | 38.7 | 120.5 | 332 | 1 | — | — | — | — | — | — |

EP 2 093 709 A1

# FIG.22

# FIG.23  ORDERED COMBINATION OF M FEATURE POINT = [w1,w2,w3,w4,w5,w6]

| FEATURE VECTOR ELEMENT NO. | $\nu_1$ FEATURE POINT NO. | $\nu_2$ FEATURE POINT NO. | $\nu_3$ FEATURE POINT NO. | $\nu_4$ FEATURE POINT NO. |
|---|---|---|---|---|
| 1 | w1 | w2 | w3 | w4 |
| 2 | w1 | w2 | w3 | w5 |
| 3 | w1 | w2 | w3 | w6 |
| 4 | w1 | w2 | w4 | w5 |
| 5 | w1 | w2 | w4 | w6 |
| 6 | w1 | w2 | w5 | w6 |
| 7 | w1 | w3 | w4 | w5 |
| 8 | w1 | w3 | w4 | w6 |
| 9 | w1 | w3 | w5 | w6 |
| 10 | w1 | w4 | w5 | w6 |
| 11 | w2 | w3 | w4 | w5 |
| 12 | w2 | w3 | w4 | w6 |
| 13 | w2 | w3 | w5 | w6 |
| 14 | w2 | w4 | w5 | w6 |
| 15 | w3 | w4 | w5 | w6 |

EP 2 093 709 A1

# FIG.24

15-DIMENTIONAL FEATURE VECTOR (NUMBERS ARE ROUNDED OFF TO THREE DECIMAL PLACES)

| PRINCIPAL FEATURE POINT NO. | FEATURE VECTOR NO. | ELEMENT 1 | ELEMENT 2 | ELEMENT 3 | ELEMENT 4 | ELEMENT 5 | ELEMENT 6 | ELEMENT 7 | ELEMENT 8 | ELEMENT 9 | ELEMENT 10 | ELEMENT 11 | ELEMENT 12 | ELEMENT 13 | ELEMENT 14 | ELEMENT 15 |
|---|---|---|---|---|---|---|---|---|---|---|---|---|---|---|---|---|
| 1 | 1 | ... | ... | ... | ... | ... | ... | ... | ... | ... | ... | ... | ... | ... | ... | ... |
| 1 | 2 | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| 7 | 1 | 0.07 | −0.10 | −0.08 | 0.51 | 1.21 | −0.79 | 0.84 | 2.00 | −1.09 | 1.78 | 0.20 | 0.28 | −0.18 | 3.30 | 3.60 |
| ... | ... | ... | ... | ... | ... | ... | ... | ... | ... | ... | ... | ... | ... | ... | ... | ... |
| 7 | 8 | 0.89 | 1.31 | −3.25 | 0.60 | 1.42 | −0.87 | 0.64 | 1.52 | 0.78 | 1.78 | 0.30 | 0.40 | 2.43 | 3.39 | 1.03 |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| 16 | 9 | ... | ... | ... | ... | ... | ... | ... | ... | ... | ... | ... | ... | ... | ... | ... |

EP 2 093 709 A1

# FIG.25

abcd

efgh

nec

## FIG.26

15-DIMENTIONAL FEATURE VECTOR (NUMBERS ARE ROUNDED OFF TO THREE DECIMAL PLACES)

| PRINCIPAL FEATURE POINT NO. | FEATURE VECTOR NO. | ELEMENT 1 | ELEMENT 2 | ELEMENT 3 | ELEMENT 4 | ELEMENT 5 | ELEMENT 6 | ELEMENT 7 | ELEMENT 8 | ELEMENT 9 | ELEMENT 10 | ELEMENT 11 | ELEMENT 12 | ELEMENT 13 | ELEMENT 14 | ELEMENT 15 |
|---|---|---|---|---|---|---|---|---|---|---|---|---|---|---|---|---|
| 1 | 1 | −0.79 | −0.48 | −0.60 | −1.06 | −0.68 | −0.76 | 1.18 | 0.75 | 1.54 | 0.79 | 1.46 | 1.98 | 4.26 | 1.94 | 0.14 |
| 1 | 2 | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| ... | ... | ... | ... | ... | ... | ... | ... | ... | ... | ... | ... | ... | ... | ... | ... | ... |
| 15 | 7 | ... | ... | ... | ... | ... | ... | ... | ... | ... | ... | ... | ... | ... | ... | ... |

EP 2 093 709 A1

# FIG.27

ABCD
EFGH
NEC

# FIG.28

# FIG.29

START

COMPUTE ERROR SQUARE SUM  S41

ERROR SQUARE SUM < TH1  S42

NO

YES

INCREASE FEATURE VECTOR
ACCORDANCE NUMBER OF
CORRESPONDING REGISTERED
IMAGE BY ONE  S43

END

# FIG.30

15-DIMENTIONAL FEATURE VECTOR (NUMBERS ARE ROUNDED OFF TO THREE DECIMAL PLACES)

| ELEMENT 1 | ELEMENT 2 | ELEMENT 3 | ELEMENT 4 | ELEMENT 5 | ELEMENT 6 | ELEMENT 7 | ELEMENT 8 | ELEMENT 9 | ELEMENT 10 | ELEMENT 11 | ELEMENT 12 | ELEMENT 13 | ELEMENT 14 | ELEMENT 15 |
|---|---|---|---|---|---|---|---|---|---|---|---|---|---|---|
| 0.91 | 1.30 | −3.59 | 0.60 | 1.41 | −0.89 | 0.63 | 1.50 | 0.80 | 1.81 | 0.29 | 0.39 | 2.54 | 3.50 | 1.03 |

EP 2 093 709 A1

# FIG.31

DOCUMENT IMAGE RETRIEVAL FEATURE
VALUE GENERATING SYSTEM R

REGISTERED IMAGE
FEATURE VALUE
COMPUTING DEVICE — R1

RETRIEVED IMAGE
FEATURE VALUE
COMPUTING DEVICE — R2

REGISTERED IMAGE
FEATURE VALUE
STORAGE DEVICE — R3

EP 2 093 709 A1

# FIG.32

REGISTERED IMAGE FEATURE
VALUE COMPUTING DEVICE R1

FEATURE POINT
EXTRACTING UNIT R11

REGISTERED IMAGE
FEATURE VALUE
COMPUTING UNIT R12

| BINARY IMAGE GENERATING SECTION | ~R111 |

| PRINCIPAL FEATURE POINT SETTING SECTION | ~R121 |

| WORD REGION COMPUTING SECTION | ~R112 |

| NEIGHBOR FEATURE POINT COMPUTING SECTION | ~R122 |

| WORD CENTROID COMPUTING SECTION | ~R113 |

| NEIGHBOR FEATURE POINT SELECTING SECTION | ~R123 |

| INVARIANT COMPUTING SECTION | ~R124 |

REGISTERED IMAGE FEATURE VALUE STORAGE DEVICE   ~R3

# FIG.33

```
        ┌─────────┐
        │  START  │
        └────┬────┘
             │           ⌐SR11
             ▼
┌────────────────────────────────┐
│   FEATURE POINT EXTRACTION      │
│         PROCESSING              │
└────────────────┬───────────────┘
                 │         ⌐SR12
                 ▼
┌────────────────────────────────┐
│  REGISTERED IMAGE FEATURE VALUE │
│      EXTRACTION PROCESSING      │
└────────────────┬───────────────┘
                 │
                 ▼
             ┌───────┐
             │  END  │
             └───────┘
```

# FIG.34

```
                  ⌐SR11
        ┌─────────┐
        │  START  │
        └────┬────┘
             │         ⌐SR111
             ▼
┌────────────────────────────────┐
│ BINARY IMAGE GENERATION PROCESSING │
└────────────────┬───────────────┘
                 │         ⌐SR112
                 ▼
┌────────────────────────────────┐
│  WORD REGION LABELING PROCESSING │
└────────────────┬───────────────┘
                 │         ⌐SR113
                 ▼
┌────────────────────────────────┐
│   WORD CENTROID COMPUTATION     │
│          PROCESSING             │
└────────────────┬───────────────┘
                 │
                 ▼
             ┌───────┐
             │  END  │
             └───────┘
```

# FIG.35

```
                    ( START )～SR12

┌──────────────────────────────────────┐
│        SET CERTAIN FEATURE POINT       │～SR1201
│        AS PRINCIPAL FEATURE POINT      │
└──────────────────────────────────────┘

┌──────────────────────────────────────┐
│       SELECT NEIGHBOR FEATURE POINTS   │～SR1202
│              (N POINTS)                │
└──────────────────────────────────────┘

┌──────────────────────────────────────┐
│   SELECT ONE COMBINATION OF M POINTS   │～SR1203
│         WHICH ARE SELECTED FROM        │
│             AMONG N POINTS             │
└──────────────────────────────────────┘

┌──────────────────────────────────────┐
│    COMPUTE FEATURE VECTOR FROM         │～SR1204
│  COMBINATION OF M POINTS AND STORE     │
│            FEATURE VECTOR              │
└──────────────────────────────────────┘
```

SR1205

IS FEATURE VECTOR FOR ALL OF COMBINATIONS OF M POINTS WHICH CAN BE SELECTED FROM AMONG N POINTS COMPUTED?

NO

YES

SR1206

IS COMPUTATION OF FEATURE VECTOR FOR ALL FEATURE POINTS COMPLETED?

NO

YES

( END )

# FIG.36

SELECT N (= 7)
NEIGHBOR POINTS

SELECT M (= 6)
POINTS FROM
AMONG N POINTS

SELECT F (= 4)
POINTS FROM
AMONG M POINTS

$_{N}C_{M}$ (= 7) COMBINATIONS

$_{M}C_{F}$ (= 15) COMBINATIONS

EP 2 093 709 A1

# FIG.37

Document ID = 1

Selected Point ID = 1:  N(=7)-Nearest Neighbor Point IDs = {2,4,5,7,9,10,11}

Feature Vector from {2,4,5,7,9,10} = (1.5, 0.3,  ....    0.87)  ⎫
Feature Vector from {2,4,5,7,9,11} = (....   ....,   ....,   ....,)  ⎪
Feature Vector from {2,4,5,7,10,11} = (....   ....,   ....,   ....,)  ⎪
Feature Vector from {2,4,5,9,10,11} = (....   ....,   ....,   ....,)  ⎬ $_N C_M$ (= 7) COMBINATIONS
Feature Vector from {2,4,7,9,10,11} = (....   ....,   ....,   ....,)  ⎪
Feature Vector from {2,5,7,9,10,11} = (....,   ....,   ....,   ....,)  ⎪
Feature Vector from {4,5,7,9,10,11} = (....,   ....,   ....,   ....,)  ⎭

$_M C_F$ (= 15)-DIMENSIONAL

Selected Point ID = 2:  N(=7)-Nearest Neighbor Point IDs = {1,4,5,7,8,10,11}

Feature Vector from {1,4,5,7,8,10,12} = (....,   ....,   ....,   ....,)

...

EP 2 093 709 A1

**FIG.38**

REGISTERED IMAGE FEATURE VALUE COMPUTING DEVICE R2

FEATURE POINT EXTRACTING UNIT R21

| BINARY IMAGE GENERATING SECTION | ~R211 |

| WORD REGION COMPUTING SECTION | ~R212 |

| WORD CENTROID COMPUTING SECTION | ~R213 |

RETRIEVED IMAGE FEATURE VALUE COMPUTING UNIT R22

| PRINCIPAL FEATURE POINT SETTING SECTION | ~R221 |

| NEIGHBOR FEATURE POINT COMPUTING SECTION | ~R222 |

| NEIGHBOR FEATURE POINT SELECTING SECTION | ~R223 |

| CYCLIC COMPUTING SECTION | ~R224 |

| INVARIANT COMPUTING SECTION | ~R225 |

# FIG.39

START

↓

SR21

FEATURE POINT EXTRACTION
PROCESSING

↓

SR22

RETRIEVED IMAGE FEATURE VALUE
EXTRACTION PROCESSING

↓

END

# FIG.40

START ~SR22

SET CERTAIN FEATURE POINT AS PRINCIPAL FEATURE POINT ~SR2201

SELECT NEIGHBOR FEATURE POINTS (N POINTS) ~SR2202

SELECT ONE COMBINATION OF M POINTS WHICH ARE SELECTED FROM AMONG N POINTS ~SR2203

COMPUTE CYCLIC PERMUTATION FOR COMBINATION OF M POINTS ~SR2204

COMPUTE FEATURE VECTOR FROM COMBINATION OF M POINTS WHICH ARE CIRCULATED ~SR2205

SR2206 — IS COMPUTATION OF FEATURE VECTOR FOR ALL OF CYCLIC ARRANGEMENTS OF M POINTS COMPLETED? — NO — YES

SR2207 — IS FEATURE VECTOR FOR ALL OF COMBINATIONS OF M POINTS WHICH CAN BE SELECTED FROM AMONG N POINTS COMPUTED? — NO — YES

SR2208 — IS COMPUTATION OF FEATURE VECTOR FOR ALL FEATURE POINTS COMPLETED? — NO — YES

END

**INTERNATIONAL SEARCH REPORT**

International application No.

PCT/JP2007/073156

A. CLASSIFICATION OF SUBJECT MATTER
*G06T7/00*(2006.01)i, *G06F17/30*(2006.01)i, *G06T1/00*(2006.01)i

According to International Patent Classification (IPC) or to both national classification and IPC

B. FIELDS SEARCHED

Minimum documentation searched (classification system followed by classification symbols)
G06T7/00, G06F17/30, G06T1/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2007 |
| Kokai Jitsuyo Shinan Koho | 1971–2007 | Toroku Jitsuyo Shinan Koho | 1994–2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2006/092957 A1 (Osaka Prefecture University), 08 September, 2006 (08.09.06), Full text; all drawings (Family: none) | 1-27 |
| Y | JP 10-207985 A (Oki Electric Industry Co., Ltd.), 07 August, 1998 (07.08.98), Full text; all drawings (Family: none) | 1-27 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 December, 2007 (14.12.07) | Date of mailing of the international search report<br>25 December, 2007 (25.12.07) |
|---|---|
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006324095 A

### Non-patent literature cited in the description

- **Tomohiro Nakai.** Use of Affine Invariants and Similarity Invariants in Fast Camera-based Document Image Retrieval. *IEIC Technical Report (pattern recognition/media understanding, PRMU2005-184-201),* 16 February 2006, vol. 105 (614), 25-30
- **Jun Sato.** Computer Vision. Corona publishing, 1999, 54-65
- **Hideyuki Tamura.** Computer Image Processing. Ohm publishing, 2002, 149-153
- **Tomohiro Nakai.** Digital Camera-based Document Image Retrieval-Retrieving then thousand pages in 0.1 second. *Information Science Technology Letters,* August 2005, vol. 4, 133-136